# EUROPÄISCHE PATENTSCHRIFT

(11) **EP 1 965 100 B1**
(45) Veröffentlichungstag und Bekanntmachung des Hinweises auf die Patenterteilung: **17.11.2010**
(21) Anmeldenummer: 08011212.1
(22) Anmeldetag: 17.04.2001
(51) Int. Cl.: F16H 61/00, F16H 57/04

(54) **Hydraulische Schaltung für ein automatisiertes Doppelkupplungsgetriebe für Kraftfahrzeuge**
Hydraulic circuit for an automated double clutch vehicle transmission
Circuit hydraulique pour une boîte de vitesses à embrayage double automatisée d'un véhicule automobile

(30) Priorität: 25.04.2000 DE 10020187
(43) Veröffentlichungstag der Anmeldung: 03.09.2008
(62) Teilanmeldung aus: 01109349.9
(73) Patentinhaber: GETRAG Getriebe- und Zahnradfabrik Hermann Hagenmeyer GmbH & Cie KG, 74199 Untergruppenbach (DE)
(72) Erfinder: Petrzik, Gunther, 78112 St. Georgen (DE)
(74) Vertreter: Steil, Christian

(56) Entgegenhaltungen:
- EP-A- 0 826 910
- EP-A2- 0 791 765
- DE-A1- 19 800 490
- DE-A1- 19 826 747
- DE-A1- 19 853 334
- JP-A- 11 230 320
- US-A- 4 729 408
- US-A- 4 742 731
- US-A- 4 903 551
- US-A- 5 222 418
- US-A- 5 665 027

## Beschreibung

Die vorliegende Erfindung betrifft eine hydraulische Schaltung für ein automatisiertes Doppelkupplungsgetriebe für Kraftfahrzeuge, das ein Vorgelegegetriebe mit zwei parallelen Kraftübertragungszweigen und zwei Kupplungen aufweist, mit
- einem Hochdruckkreis mit wenigstens einem Aktuator für das Vorgelegegetriebe und/oder die Kupplungen,
- einem Niederdruckkreis zur Schmierung und/oder Kühlung von Bauteilen des Doppelkupplungsgetriebes, und
- einer ersten Verstellpumpe zur variablen Bereitstellung des Hochdruckes für den Hochdruckkreis.

Die vorliegende Erfindung betrifft ferner ein Doppelkupplungsgetriebe mit einer derartigen hydraulischen Schaltung.

In Kraftfahrzeugen kommen vermehrt automatisierte Vorgelege- bzw. Stirnradgetriebe zum Einsatz. In diesen Getrieben betätigen Stellantriebe die Schaltkupplungen, insbesondere Synchroneinheiten, und die Anfahr- und Trennkupplung.

Solche automatisierten Handschaltgetriebe leiden an einer Unterbrechung der Zugkraft während eines Schaltvorganges, vgl. Automatisierte Kraftfahrzeuggetriebe, Hans-Joachim Förster, Springer Verlag.

Im Gegensatz hierzu können die sogenannten Doppelkupplungsgetriebe Lastschaltungen durchführen.

Doppelkupplungsgetriebe weisen zwei getrennt manipulierbare Kupplungen an der Eingangsseite auf, von denen die eine Kupplung in der Regel den geraden Gängen und die andere Kupplung in der Regel den ungeraden Gängen zugeordnet ist. Ein Gangwechsel von aufeinanderfolgenden Gängen erfolgt durch eine überschneidende Betätigung der zwei eingangsseitigen Kupplungen. Die eingangsseitig anstehende Last wird dabei quasi kontinuierlich von einem Kraftübertragungszweig des Getriebes auf den anderen Zweig übergeben. Folglich können Lastschaltungen ohne Zugkrafteinbruch durchgeführt werden.

Eine hydraulische Schaltung zur Steuerung eines Doppelkupplungsgetriebes ist teilweise offenbart in der Automobiltechnischen Zeitung ATZ 89 (1987 (9) (Porsche-Doppelkupplungsgetriebe, "PDK"), wonach der Oberbegriff der vorliegenden Erfindung gebildet ist.

Bei dem PDK ist die hydraulische Energieerzeugung in zwei Kreise zerlegt. Den hydraulischen Steuerkreis versorgt eine druckgeregelte Verstellpumpe nach dem Flügelzellenprinzip. Im Niederdruckkreis zur Schmierung arbeitet eine Konstantpumpe. Die beiden Kupplungen werden gesteuert durch proportionale Druckminderventile. Die drei Synchroneinheiten werden betätigt jeweils durch zwei 3/2-Schaltventile.

Die druckgeregelte Flügelzellenpumpe für den Hochdruckkreis arbeitet bedarfsorientiert. Die Konstantpumpe für den Niederdruckkreis fördert das Öl in Abhängigkeit von der Drehzahl des Verbrennungsmotors.

Konstantpumpen sind als hydraulische Energieversorgungssysteme wegen ihrer hohen Robustheit, ihrem geringen Gewicht, ihrem geringen Bauraum und ihren geringen Investitionskosten für mobile Anwendungen interessant. Das Fördervolumen leitet sich aus dem Zustand bei extremen Anforderungen ab. Für die übrigen Betriebszustände übersteigt die geförderte Volumenstrommenge die benötigte Volumenstrommenge, vgl. Umdruck zur Vorlesung Fluidtechnik für mobile Anwendungen, RWTH Aachen, Auflage 1, 1990, Prof. Dr.-Ing. W. Backé, Prof. Dr.-Ing. J. Helling.

Bei dem PDK bestimmt sowohl im Niederdruckkreis als auch im Hochdruckkreis ein hydraulischer Betriebszustand bei niedrigen Motordrehzahlen das Fördervolumen. Mit zunehmender Differenzdrehzahl steigt die Diskrepanz zwischen dem verfügbaren Förderstrom der Pumpe und dem erforderlichen Volumenstrom der Verbraucher. Die überschüssige hydraulische Leistung muß durch eine Ventilsteuerung als Verlustvolumenstrom abgedrosselt werden. Der Verlust entsteht bei einem tertiären Energieträger (chemisch -> mechanisch -> hydraulisch). Eine elektronische Steuerung des Druckniveaus kann den Einfluß des hydraulischen Kreises reduzieren. Ziel ist es, den Verlustfaktor Gegendruck zu senken.

Druckgeregelte Verstellpumpen erlauben es, den Volumenstrom dem Bedarf anzupassen. Die Abhängigkeit von der Motordrehzahl besteht nur bei maximaler Verstellung. Dies kommt dem energetischen Optimum nahe, da der Volumenstrom den größten Verlustfaktor darstellt.

Von seiten der Firma GETRAG wurde im Rahmen eines Projektes DKG 430 vorgeschlagen, nicht nur für den Hochdruckkreis, sondern auch für den Niederdruckkreis eine Verstellpumpe bereitzustellen. Hierdurch läßt sich zwar der Energiebedarf optimieren. Hinsichtlich Kosten und Gewicht ist diese Lösung jedoch nicht optimal.

Zur Regelung oder Steuerung der Kupplungsfunktion werden in dem PDK proportionale 3/3-Druckminderventile verwendet. Diese wandeln einen aufgeprägten Magnetspulenstrom in einem hydrostatischen Druck um. Der hydrostatische Druck wirkt auf die Stellfläche eines Hydraulikzylinders und prägt der Kupplungsmechanik eine Stellkraft auf.

Die hydraulisch mechanische Regelung erfolgt durch ein mechanisches Gleichgewicht am Ventilschieber.

Proportionale Druckminderventile weisen die folgenden prinzipiellen Nachteile dieser Ventilart auf:
- Die magnetische Hysterese führt zu einer Umkehrspanne im hydrostatischen Druck.
- Die hydraulisch mechanische Regelung des Druckminderventils unterliegt thermischen Einflüssen. Es ändern sich Stabilität und Dämpfung mit der Temperatur.
- Bei dynamischen Vorgängen, bei denen Volumenänderungen im hydraulischen Antrieb (Zylinder) entstehen, riegelt die direkte Druckrückführung den Volumenstrom ab oder auf, bevor der Solldruck erreicht ist. Dies behindert die auszuführenden Bewegungen. Die offene Übertragungsstrecke, in der Elastizität und Kompressibilität, Reibung und Massenträgheit wirken, läßt bei dynamischen Vorgängen keine genaue Zuordnung vom Magnetstrom auf den momentanen hydrostatischen Druck zu.

Generell weist die hydraulische Kupplungssteuerung des PDK die folgenden Nachteile auf:
- Die Dynamik begrenzt das momentane Fördervolumen der Pumpe. Der Verstellvorgang der Pumpe benötigt Reaktionszeit. In dieser Zeit paßt die Pumpe ihr Schluckvolumen dem induzierten Bedarf der Antriebe an. Eine Konstantpumpe stellt den momentanen Förderstrom der Pumpe bereit. Eine Steigerung der Fördermenge führt bei der Konstantpumpe bei höheren Drehzahlen zu höheren Verlusten.
- Die fehlende elektronische Rückführung des Drucks erschwert die steuerungstechnische Optimierung; die Diagnose zur Überwachung der Kupplungsfunktion ist erschwert.
- Bei dem PDK besteht die Gefahr von Getriebeblockagen bei Fehlfunktionen der Druckminderventile.
- Die in dem PDK verwendeten Trockenkupplungen lassen sich nur schwer steuern.

Andererseits benötigen Naßkupplungen aufgrund der Wirkung von der aufgeprägten Kühlölmenge auf das Schleppmoment der Kupplung eine aktive Kühlölsteuerung; wenn diese Aufgabe durch ein Magnetventil gelöst wird, erhöht sich der technische Aufwand.

Die Betätigung der Synchroneinheiten in dem PDK erfolgt elektrohydraulisch. Jede Synchroneinheit wird durch einen Antrieb, bestehend aus einem doppelt wirkenden Zylinder und zwei 3/2-Schaltventilen gesteuert. Der Zylinderantrieb besitzt zwei Federn. In der Failsafe-Stellung ist der Zylinder in seiner Mittellage. In dieser Zylinderstellung ist die Synchroneinheit in ihrer Neutralposition.

Aufgrund der Tatsache, daß jede Synchroneinheit einen doppelt wirkenden Zylinder und zwei 3/2-Schaltventile benötigt, ergeben sich hohe Kosten, ein hoher technischer Aufwand und eine hohe Anzahl von Bauteilen.

Die Betätigungskräfte lassen sich mit den Schaltventilen nicht dosieren. Daher ergeben sich hohe Schaltgeräusche, eine hohe Bauteilbelastung, das Fehlen einer Synchronkrafteinstellung und einer Positionsregelung (neutral, synchron).

Da die Fixierung durch Federn erfolgt, hält der Druck den geschalteten Gang, die Kosten sind hoch. Ferner muß ein Auslegen eines Ganges durch Federkraft erfolgen.

Es fehlt an einer externen Verriegelung gegenüber unzulässigen Betätigungen der Synchroneinheiten.

Ferner ist es bekannt, die Synchroneinheiten von automatisierten Stellgetrieben mit einer Schaltwalze zu betätigen, die elektromotorisch angetrieben ist (z.B. DE 196 12 690 C1). Elektromotorische Stellantriebe weisen gegenüber elektrohydraulischen Antrieben einige Vorzüge auf, insbesondere eine einfache Ansteuerbarkeit.

Nachteilig sind jedoch die Masse von elektrohydraulischen Antrieben, die Strombelastung des elektrischen Bordnetzes, der große benötigte Bauraum, die vergleichsweise geringe Verstellgeschwindigkeit und das vergleichsweise geringe verfügbare Stelldrehmoment. Ferner ist für jeden zu realisierenden Freiheitsgrad ein Elektromotor notwendig.

Die Massenträgheitsmomente werden bestimmt durch den Motor und die Stirnradstufe.

Auf dem Gebiet der Kegelscheibenumschlingungsgetriebe ist es ferner bekannt (DE 195 46 294 A1), die Ableitung eines Druckraums mit der Zuleitung einer Strahlpumpe zu verbinden, die über eine Ansaugleitung mit einem Flüssigkeitsvorrat verbunden ist.

Der Druckraum ist durch eine Pumpe beaufschlagbar und dient dazu, einen hydraulischen Druck zu erzeugen, der eine Verspannkraft zwischen Kegelscheibenpaaren und einem Umschlingungsmittel verursacht.

Durch die Strahlpumpe kann ein größeres Volumen an Flüssigkeit für Schmier- und/oder Kühlzwecke bereitgestellt werden.

Dabei ist an der Saugseite der Strahlpumpe ein in Ansaugrichtung öffnendes Rückschlagventil vorgesehen. Hierdurch wird sichergestellt, daß auch bei niedrigen Temperaturen das auf der Zuleitungsseite ankommende Ölvolumen an die zu kühlenden bzw. zu schmierenden Bauteile geleitet wird.

Ferner ist aus einer Studienarbeit der RWTH Aachen von Guido Reinatz, "Einsatz von Strahlapparaten in Getrieben", 1991, die Verwendung von Strahlpumpen zur Ölversorgung in hydraulischen Anlagen bekannt geworden.

Generell hat der Einsatz von Strahlpumpen in Getrieben für Kraftfahrzeuge zwei gravierende Nachteile:
1. Als hydrodynamische Pumpen besitzen Strahlpumpen eine große Abhängigkeit vom Gegendruck. Der große Temperaturbereich in Kraftfahrzeugen mit Viskositätsänderungen von drei Größenordnungen setzt den hydrodynamischen Pumpen eine technische Grenze.
2. Strahlpumpen sind Konstantpumpen. Sie können auf einen bestimmten hydraulischen und thermischen Betriebszustand ausgelegt und optimiert werden. Dabei ist im Idealfall ein Wirkungsgrad von 50 % zu erreichen. In allen anderen Betriebszuständen sind zum Teil erhebliche Einbußen im Wirkungsgrad zu erwarten.

Die Druckschrift US 4 729 408 zeigt eine Anordnung zur Regelung der Zufuhr eines unter Druck stehenden Fluids zu einer Mehrzahl von Ventilmechanismen und einer Mehrzahl von Signalregelungsvorrichtungen. Der Betrieb von einem der Ventilmechanismen unterbricht den Zustrom von Fluid zu anderen der Mehrzahl von Ventilmechanismen und anderen der Signalregelungsvorrichtungen. Dadurch können Stoßbelastungen eines Getriebes wesentlich reduziert werden.

Das der Erfindung zugrundeliegende Problem besteht darin, eine verbesserte hydraulische Schaltung für ein automatisiertes Doppelkupplungsgetriebe für Kraftfahrzeuge anzugeben.

Diese Aufgabe wird gemäß einem ersten Aspekt dadurch gelöst, daß eine hydraulische Sicherheitsschaltung im Hochdruckkreis vorgesehen ist, die verhindert, daß beide Kupplungen gleichzeitig geschlossen werden, und daß die Sicherheitsschaltung ein logisches Minderventil aufweist, dessen Steuerausgang der kleinere der Steuerdrücke für Aktuatoren der zwei Kupplungen ist.

Auf diese Weise kann bereits im Bereich der Hydraulikschaltung eine Sicherheit dafür geschaffen werden, daß eine Getriebeblockage ausgeschlossen ist.

Des Weiteren ist es vergleichsweise einfach möglich, den kleineren der Steuerdrücke der Aktuatoren mit einer vorbestimmten Schwelle zu vergleichen. Sofern der kleinere der zwei Steuerdrücke die Schwelle überschreitet, besteht die Gefahr des Schließens beider Kupplungen des Doppelkupplungsgetriebes. In einem solchen Fall sind entsprechende Sicherheitsmaßnahmen einzuleiten.

Bevorzugt ist es, wenn das Mischventil mit einem Steueranschluß eines Sicherheitsventils verbunden ist.

Des Weiteren kann der Aktuator, der mit einem geringeren Druck beaufschlagt ist, über das Sicherheitsventil mit dem Ölsumpf verbindbar sein.

Außerdem ist es bevorzugt, wenn der Niederdruckkreis eine Mehrzahl von zweiten Pumpen aufweist, die parallel an die erste Verstellpumpe angeschlossen sind.

Auf diese Weise läßt sich der Energiebedarf in vielen Betriebszuständen senken.

Dabei können die zweiten Pumpen als Strahlpumpen ausgebildet sein, die triebstromseitig an den Ausgang der ersten Verstellpumpe angeschlossen sind.

Auf diese Weise läßt sich eine mechanisch angetriebene Niederdruckpumpe vollkommen oder zumindest für einige Schmier-/Kühlungsaufgaben ersetzen.

Die Versorgung der Strahlpumpen durch eine druckgeregelte Verstellpumpe macht die Strahlpumpe einer Konstantpumpe überlegen.

Besonders bevorzugt ist es, wenn wenigstens eine der Strahlpumpen triebstromseitig über ein Schaltventil an den Ausgang der ersten Verstellpumpe angeschlossen ist.

Dabei ist es von besonderem Vorzug, wenn das Schaltventil temperaturgesteuert ist.

Ferner ist es besonders bevorzugt, wenn die Strahlpumpe saugstromseitig über das Schaltventil an einen Ölsumpf bzw. eine Fluidversorgung angeschlossen ist.

Insgesamt ist das Konzept der Versorgung von Strahlpumpen durch eine druckgeregelte Verstellpumpe sowie der Steuerbarkeit der Strahlpumpe gegenüber einer Konstantpumpe überlegen. Der Wirkungsgrad von Strahlpumpen ist bezogen auf die aufzuwendende mechanische Leistung zwar vergleichsweise niedrig (etwa kleiner 50 %). Der mechanische Leistungsbedarf ist unabhängig von der Motordrehzahl und läßt sich durch Abschalten quasi auf einen Nullvolumenstrom reduzieren.

Die Verstellpumpe senkt auch im Hochdruckkreis den Leistungsbedarf. Außerhalb von Schaltvorgängen ist lediglich ein Ausgleich von Leckagen im System und der aktiven Kupplung bereitzustellen.

Die Kombination von steuerbaren Strahlpumpen und einer druckgeregelten Verstellpumpe besitzt gegenüber bekannten Versorgungsarten des Niederdruckkreises eines automatisierten Doppelkupplungsgetriebes die folgenden Vorteile:
1. Für den Niederdruckkreis ist keine hydraulisch mechanische Pumpe bereitzustellen.
2. Der Energiebedarf wird in vielen Betriebszuständen gesenkt.
3. Das Gewicht und die Kosten werden gesenkt, insbesondere wenn Strahlpumpen aus Kunststoff bereitgestellt werden.
4. Das Antriebsmoment, das von der Verstellpumpe bestimmt wird, ist im Kaltstart reduziert.
5. Die Anordnung der Strahlpumpen im Getriebe ist flexibel, z.B. in der Nähe von Verbrauchern, was den Gegendruck reduziert.
6. Aufgrund fehlender bewegter Teile ergibt sich eine hohe Funktionssicherheit.
7. Der Verschleiß von Strahlpumpen ist außerordentlich gering.
8. Das Druckniveau im Niederdruckkreis wird durch die Zerlegung in Teilkreise auf geringere Volumenströme gesenkt, die Leitungen sind kürzer.

Die Verstellgeschwindigkeit der Verstellpumpe ist für die Aufgaben im Schmier- und Kühlkreis ausreichend. Durch die Verwendung eines Schaltventiles (insbesondere Sperrventiles) entsteht keine Verlustwirkung. Der Treibstrom für die Strahlpumpen ist der Verstellpumpe direkt zu entnehmen, so daß unnötige Drosselverluste (z.B. durch ein Rückschlagventil) vermieden werden.

Für den Hochdruckkreis ist es besonders bevorzugt, wenn ein Energiespeicher (z.B. Gas-Membranspeicher) bereitgestellt ist, der vorzugsweise gegenüber dem Niederdruckkreis durch ein Sperrventil entkoppelt ist.

Hierdurch wird die Verfügbarkeit des gespeicherten Drucköls gesichert. Durch den Energiespeicher bzw. Hydrospeicher ergeben sich in Verbindung mit der ersten Verstellpumpe die folgenden Vorteile:
1. Verluste außerhalb von Schaltvorgängen werden minimiert.
2. Der Systemdruck ist konstant.
3. Es entsteht kein Drehzahleinfluß.

Ferner verkürzt der Energiespeicher die Schließzeiten der Kupplung und verbessert die Regelbarkeit infolge quasi konstanter Druckverhältnisse auf Seite des Systemdrucks. Günstig ist zudem, daß der Förderstrom der Pumpe keinen Einfluß auf die Schließzeiten der Kupplung und auf die Schaltfunktion aufweist.

Gemäß einem besonders bevorzugten Ausführungsbeispiel ist die temperaturgesteuerte Strahlpumpe triebstromseitig parallel zu dem Schaltventil über eine Blende an den Ausgang der ersten Verstellpumpe angeschlossen.

Auf diese Weise ist selbst bei geschlossenem Schaltventil eine Grundversorgung der zu schmierenden bzw. zu kühlenden Bauteile des Doppelkupplungsgetriebes gewährleistet.

Dabei ist es bevorzugt, wenn der Öffnungsquerschnitt der Blende temperaturgesteuert ist.

Auf diese Weise läßt sich die Grundversorgung in Abhängigkeit von der Temperatur einstellen.

Gemäß einer weiteren bevorzugten Ausführungsform sind wenigstens zwei Strahlpumpen in Reihe schaltbar angeordnet.

Auf diese Weise ist es möglich, die Ausgangsseite einer Strahlpumpe mit der Saugstromseite einer zweiten Strahlpumpe zu verbinden. Hierdurch ergibt sich eine Reihe von Vorteilen. So entsteht auf der Ausgangsseite der ersten Strahlpumpe ein geringerer Gegendruck. Durch die Hintereinanderschaltung der zweiten Strahlpumpe lassen sich höhere Ausgangsvolumenströme realisieren ("Pipeline-Prinzip").

Dabei ist es besonders bevorzugt, wenn eine der Strahlpumpen ausgangsseitig mit einem Kühler verbunden ist und wenn der Ausgang des Kühlers mit der Saugstromseite einer weiteren Strahlpumpe verbindbar ist.

Auf diese Weise wird der weiteren Strahlpumpe gekühltes Öl aus dem Kühler zugeführt.

Generell ist es bevorzugt, wenn wenigstens eine der Strahlpumpen ausgangsseitig mit einem Kühler verbunden ist.

Es versteht sich, daß diese Strahlpumpe besonders bevorzugt über ein temperaturgesteuertes Schaltventil an den Ausgang der ersten Verstellpumpe angeschlossen ist. Bei hohen Temperaturen wird diese Strahlpumpe zugeschaltet, und das Öl wird gekühlt.

Es ist insgesamt von Vorzug, wenn der ausgangsseitige Gemischvolumenstrom von wenigstens einer der Strahlpumpen den Radsatz und/oder die Schaltkupplungen des Vorgelegegetriebes schmiert und/oder kühlt.

Ferner ist es von Vorzug, wenn der ausgangsseitige Gemischvolumenstrom von wenigstens einer weiteren der Strahlpumpen die Kupplungen (Fahrkupplungen) kühlt.

Gemäß einem besonders bevorzugten Ausführungsbeispiel weist der Niederdruckkreis vier Pumpen auf, von denen jeweils eine den zwei Kupplungen, eine dem Getriebe und eine einem Ölkühler zugeordnet ist.

Sofern sämtliche vier Pumpen über Schalt- bzw. Sperrventile an den Ausgang der ersten Verstellpumpe angeschlossen sind, ergeben sich insgesamt theoretisch 16 unterschiedliche Schaltzustände. Folglich läßt sich eine bedarfsorientierte Schmierung und/oder Kühlung des Getriebes und/oder der Fahrkupplungen erreichen.

Dabei greifen die Steuerungen der Strahlpumpen vorzugsweise in die Treib- und die Saugströme ein. Durch die Steuerung des Treibstromes wird eine Anpassung an den hydraulischen Bedarf möglich. Die Sperrung des Sauganschlusses verhindert die negative Wirkung des Gegendrucks im Mischrohr. Ein Verlust von Treibstrom über den Sauganschluß ist steuerbar. Denn mit sinkender Öltemperatur ergibt sich eine extreme Zunahme der Viskosität und folglich eine Zunahme des Fließwiderstandes im Mischrohr.

Als Stellglieder für die schaltbaren Strahlpumpen sind generell mechanische, hydraulisch-mechanische, thermisch-mechanische und elektrisch-mechanische Systeme denkbar. Besonders bevorzugt ist eine hydraulisch-mechanische Steuerung der Kupplungskühlung und eine thermisch-mechanische Steuerung der Grundkühlung und des Kühlerstroms. Besonders bevorzugt ist es ferner, wenn alle Schaltventile schaltungstechnisch gleich aufgebaut sind. In passiver Schaltstellung sind dabei die Zuleitungen für den Treib- und den Saugstrom gesperrt. In aktiver Schaltstellung der Ventile sind die Zuleitungen freigegeben.

Als Stellglieder für die thermisch-mechanische Steuerung sind z.B. Dehnstoffelemente (bspw. von Behr-Thomson verfügbar) und Bimetallelemente einsetzbar.

Die Strahlpumpen für die Kupplungskühlung sind vorzugsweise hydraulisch gesteuert. Eine aktive Steuerung des Druckes kann bspw. über eine hydraulische Nebenfunktion der Kupplungsventile oder über ein Magnetventil (Schaltventil oder Druckregelventil) erfolgen.

Des Weiteren ist es bevorzugt, wenn der Hochdruckkreis für die zwei Kupplungen jeweils einen Aktuator und ein proportionales Wegeventil aufweist.

Ein proportionales Wegeventil ermöglicht eine elektronische Korrektur der magnetischen Hysterese und Reibung im Stellzylinder. Ferner ergibt sich eine Erhöhung der Regelgüte durch Verbesserung der Stabilität und der Dämpfung. Die zeitlichen Abläufe lassen sich durch eine elektronische Überwachung straffen. Ferner können Fehlfunktionen im Kupplungsverhalten frühzeitig erkannt werden (Diagnose).

Dabei erfolgt die Regelung des mechanischen Zustands der Kupplung durch eine vorzugsweise digitale Druckregelung des Kolbendrucks in einem einfach wirkenden Stellzylinder als Aktuator. Die Modulation des hydrostatischen Druckes wird über den zu- und abfließenden Volumenstrom gesteuert.

Dabei ist es besonders bevorzugt, wenn die proportionalen Wegeventile jeweils eine Ruhestellung besitzen, in der die zugeordnete Kupplung geöffnet ist und in der ein Steuerausgang für eine Nebenfunktion gesperrt ist.

Anstelle einer Sperrung des Steuerausgangs (passive Nebenfunktion) ist es natürlich auch möglich, den Steuerausgang in der Ruhestellung zu öffnen (aktiv).

Da für die eigentlichen Steueraufgaben des Kupplungsaktuators jeweils ein proportionales 3/3-Wegeventil vollkommen ausreichend wäre, ist es durch die Funktionserweiterung im hydraulischen Teil der Kupplungsventile möglich, andere Magnetventile einzusparen. Die Kupplungsventile übernehmen dabei zusätzlich deren Aufgabe.

Zwar ist es im Stand der Technik bereits bekannt (Direktschaltgetriebe des Lupos 3L), daß ein Kupplungsventil als Nebenfunktion die Druckleitung zum Getriebeaktuator schaltet. Dabei ist die Druckleitung im stromlosen Zustand gesperrt. Die Leckage der nachgeschalteten Schieberventile reduziert sich und der Druck in der Druckleitung sinkt.

Im vorliegenden Fall ist jedoch nicht nur an eine solche Nebenfunktion gedacht. Vielmehr ist es im Rahmen der Erfindung auch oder alternativ möglich, Stellantriebe für die Synchroneinheiten bzw. Schaltkupplungen auszuwählen, eine Kupplungskühlung zu aktivieren und/oder Kupplungsblenden zu steuern.

Die hydraulische Steuerung der Kupplungskühlung sowie die Auswahl, die Sperrung und die Freischaltung von Stellantrieben sind Aufgaben, die mit der Kupplung eines Doppelkupplungsgetriebes funktional verbunden sind.

Generell ist es sogar möglich, den Zustand der Kupplung für Steuerungszwecke zu nutzen. Dabei kann bspw. der Kupplungsdruck zur Auswahl und/oder Sperrung von Stellantrieben für die Synchroneinheiten dienen.

Ferner ist es dadurch, daß für jede der zwei Kupplungen des Doppelkupplungsgetriebes ein proportionales Wegeventil vorgesehen ist, eine Kombination der Nebenfunktionen der zwei Ventile möglich.

Dabei ist es besonders bevorzugt, wenn die proportionalen Wegeventile jeweils eine weitere Ruhestellung besitzen, in der die zugeordnete Kupplung geschlossen ist und in der der Steuerausgang gesperrt (oder geöffnet) ist.

Durch diese Maßnahme wird das proportionale Wegeventil um zwei Schaltstellungen erweitert. Die Nebenfunktion, die im hydraulischen Teil integriert ist, basiert in diesem Fall auf einer Zweikantensteuerung. Hierdurch läßt sich erreichen, daß die Nebenfunktion unabhängig davon, welche der zwei Kupplungen aktiv und welche passiv ist, immer gleich ist. Bei einem Doppelkupplungsgetriebe ist generell eine Kupplung aktiv und die andere passiv. Dabei sind die Kupplungsventile in diesem Zustand gegenläufig geschaltet. Unabhängig davon kann die Nebenfunktion bei einer Zweikantensteuerung gleich gewählt werden. Es versteht sich, daß eine symmetrische Charakteristik der Kennlinie besonders bevorzugt ist.

Es versteht sich, daß eine solche Kopplung von primären und Nebenfunktionen im proportionalen Wegeventil für eine Kupplung eine eindeutige steuerungstechnische Abhängigkeit voraussetzt.

Insgesamt ist es von Vorzug, wenn die zwei Ruhestellungen bzw. zwei weiteren Stellungen gegenüberliegende Endstellungen der proportionalen Wegeventile sind.

Auf diese Weise läßt sich eine symmetrische Kennlinie besonders einfach erreichen.

Von besonderem Vorzug ist es, wenn die proportionalen Wegeventile zur Ansteuerung der Aktuatoren für die zwei Kupplungen 4/5-Wegeventile sind.

Als Nebenfunktion ist es bevorzugt, wenn hierdurch ein Aktuator für eine Schaltkupplung des Vorgelegegetriebes freigegeben wird.

Besonders bevorzugt ist es, wenn die Freigabe des Aktuators durch eine Kombination der Steuerausgänge für die Nebenfunktion der zwei proportionalen Wegeventile erfolgt.

Wie erwähnt, ist es besonders bevorzugt, wenn die Nebenfunktion die Kühlung der dem proportionalen Wegeventil zugeordneten Kupplung ist.

Es kann eine weitere hydraulische Sicherheitsschaltung im Hochdruckkreis für einen Drucksensor vorgesehen sein.

Auf diese Weise läßt sich bei Ausfall des Drucksensors eine hydraulische Notfunktion durch ein Modulieren des Kupplungsdruckes realisieren.

Besonders bevorzugt ist es dabei, wenn die weitere Sicherheitsschaltung wenigstens eine Blende in einem Parallelzweig aufweist, durch die eine Kennlinie von Druck über einer Stellgröße eines Ventils zur Drucksteuerung vorgegeben wird, wobei der Wert der Stellgröße mit dem entsprechenden Wert des Drucksensors vergleichbar ist.

Auf diese Weise kann eine Modulation bspw. des Kupplungsdruckes ähnlich der Schaltkraftsteuerung mittels einer Blendensteuerung erfolgen. Die Konstantblenden lassen sich entweder durch ein Notventil bei Bedarf aktivieren oder wirken permanent im Regelbereich der Kupplung. Sie erhöhen den Steuerölstrom lediglich im Schaltvorgang.

Besonders bevorzugt ist es dabei, wenn der Steuerölstrom durch die Blende zur Kühlung/Schmierung verwendet wird.

Insgesamt wird die erfindungsgemäße Aufgabe auch durch ein Doppelkupplungsgetriebe mit einer hydraulischen Schaltung gelöst, wie sie oben beschrieben ist.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere sind die Merkmale der Erfindung auch auf andere hydraulische Schaltungen für Getriebe anwendbar, nicht nur für Doppelkupplungsgetriebe. Auch ist nicht notwendigerweise eine Aufteilung in einen Hoch- und einen Niederdruckkreis notwendig.

Ausführungsbeispiele der Erfindung sind in der Zeichnung dargestellt und werden in der nachfolgenden Beschreibung näher erläutert. Es zeigen:
- Fig. 1: eine nicht erfindungsgemäße Ausführungsform einer hydraulischen Schaltung für ein automatisiertes Dop- pelkupplungsgetriebe;
- Fig. 2: eine Ausführungsform eines Niederdruckkreises der hydraulischen Schaltung der Fig. 1;
- Fig. 3: eine Tabelle mit Schaltzuständen von Strahlpumpen der Niederdruckkreise der Fig. 2 bis 4;
- Fig. 4: eine Darstellung von Volumenstrom über Öltemperatur für drei in Fig. 5 angegebene Betriebszustände;
- Fig. 5: eine Darstellung von Volumenstrom über Öltemperatur für weitere Betriebszustände, die in Fig. 5 gezeigt sind;
- Fig. 6: eine Darstellung von Volumenstrom über Öltemperatur für weitere Betriebszustände, die in Fig. 5 gezeigt sind;
- Fig. 7: eine alternative Ausführungsform eines Niederdruckkreises der hydraulischen Schaltung der Fig. 1;
- Fig. 8: eine weitere alternative Ausführungsform eines Niederdruckkreises für die hydraulische Schaltung der Fig. 1;
- Fig. 9: eine Ausführungsform eines Hochdruckkreises der hydraulischen Schaltung der Fig. 1;
- Fig. 10: eine schematische Darstellung eines 4/5-Wegeventiles zur Kupplungssteuerung in dem Hochddruckkreis der Fig. 9;
- Fig. 11: eine schematische Darstellung eines 4/4-Wegeventiles für die Schaltaktuatoren des Hochdruckkreises der Fig. 9;
- Fig. 12: eine Darstellung von Volumenstrom über Magnetstrom des 4/5-Wegeventiles der Fig. 10 unter Einbeziehung der Nebenfunktion;
- Fig. 13: eine alternative Ausführungsform eines Hochdruckkreises der hydraulischen Schaltung der Fig. 1, wobei als Schaltaktuator eine einzelne Schaltwalze vorgesehen ist;
- Fig. 14: eine weitere alternative Ausführungsform eines Hoch- druckkreises, bei dem eine Schaltwalze und ein Zylin- der als Getriebeaktuatoren vorgesehen sind;
- Fig. 15: eine weitere alternative Ausführungsform eines Hoch- druckkreises, wobei zwischen die Steuerventile und die Getriebeaktuatoren Schaltventile zur Freigabe zwischengeschaltet sind, und wobei nur ein Wegeventil zur Ansteuerung der zwei Getriebeaktuatoren vorgese- hen ist;
- Fig. 16: eine ähnliche Darstellung wie Fig. 15, jedoch mit einer unterschiedlichen Art der Ansteuerung der zwi- schengeschalteten Schaltventile;
- Fig. 17: eine Abwandlung der Ausführungsform der Fig. 14 mit nur einem Wegeventil zur Ansteuerung der Getriebeak- tuatoren;
- Fig. 18: eine erfindungsgemäße Ausführungsform eines Hoch- druckkreises der hydraulischen Schaltung der Fig. 1 mit einer Sicherheitsschaltung zur Verhinderung von Getriebeblockagen und mit einer Sicherheitsschaltung für einen Drucksensor;
- Fig. 19: eine Abwandlung des in Fig. 18 gezeigten Hochdruck- kreises;
- Fig. 20: eine beispielhafte Darstellung einer Realisierung einer Strahlpumpe in einer Seitenansicht;
- Fig. 21: eine Draufsicht auf die Strahlpumpe der Fig. 20; und
- Fig. 22: eine schematische Darstellung einer Realisierung einer Strahlpumpe durch gegenüberliegende Teile eines Getriebegehäuses und einer Ventilplatte.

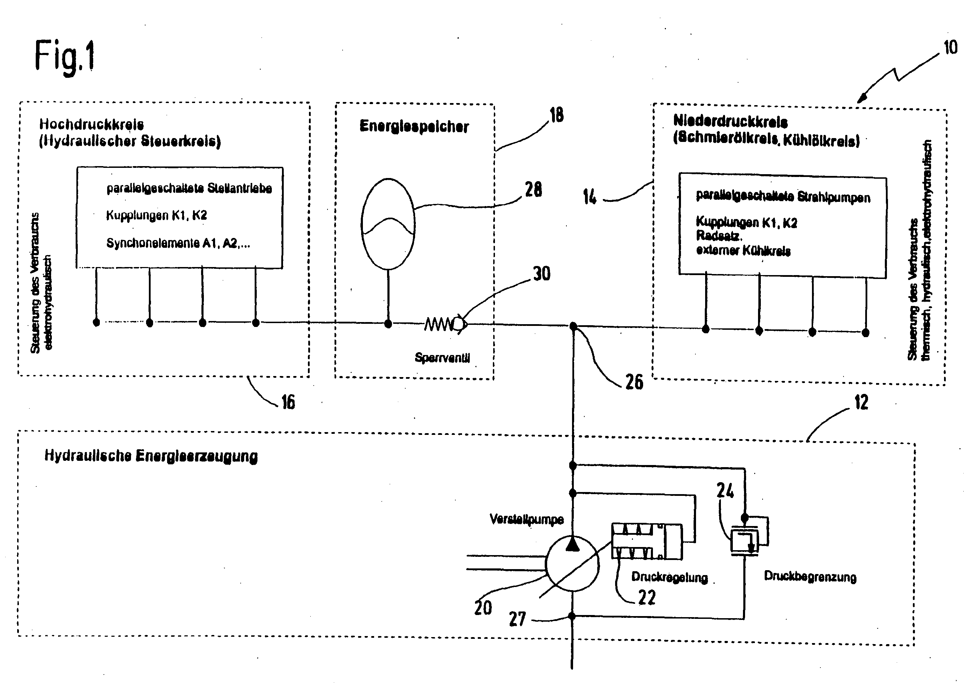

Eine Ausführungsform einer erfindungsgemäßen hydraulischen Schaltung ist in Fig. 1 dargestellt und generell mit 10 bezeichnet.

Die hydraulische Schaltung 10 umfaßt einen hydraulischen Energieerzeugungsabschnitt 12, einen Niederdruckkreis 14, einen Hochdruckkreis 16 und einen Energiespeicherabschnitt 18.

Der hydraulische Energieerzeugungsabschnitt 12 umfaßt eine hydraulische Verstellpumpe 20, die mittels eines Druckreglers 22 verstellbar ist. Ferner ist ein Druckbegrenzer 24 in an sich bekannter baulicher Anordnung vorgesehen.

Ein Ausgang der Verstellpumpe 20 ist bei 26 gezeigt. Der Eingang 27 der Verstellpumpe 20 ist mit einem nicht näher bezeichneten Ölsumpf bzw. Ölreservoir verbunden.

Der Ausgang 26 der Verstellpumpe 20 ist einerseits mit dem Niederdruckkreis 14 verbunden und andererseits mit dem Energiespeicherabschnitt 18. Der Energiespeicherabschnitt 18 ist zwischen dem Ausgang 26 der Verstellpumpe 20 und dem Hochdruckkreis 16 angeordnet.

Der Energiespeicherabschnitt 18 umfaßt einen Energiespeicher 28 beliebiger Bauart und ein Sperrventil 30.

Folglich wird der Druck im Hochdruckkreis 16 stabilisiert. Das Sperrventil 30 sichert die Verfügbarkeit des gespeicherten Drucköls.

Die Verstellpumpe 20 ist so gewählt, daß ihre Verstellgeschwindigkeit für die Aufgaben im Niederdruckkreis 14 ausreichend ist.

Der Niederdruckkreis 14 dient zum Schmieren und Kühlen von Bauelementen des Doppelkupplungsgetriebes, für das die hydraulische Schaltung 10 konzipiert ist. Primäre hydraulische Zielgröße ist in dem Niederdruckkreis 14 der Volumenstrom. Der hydrostatische Druck dient ausschließlich zur Überwindung von Fließwiderständen, die sich durch den sich einstellenden Volumenstrom ergeben.

Durch die Schmierung, insbesondere eine Einspritzschmierung, werden die ineinandergreifenden Zahnräder, die Schaltmuffen und die Lagerungen der Wellen eines Vorgelegegetriebes des Doppelkupplungsgetriebes gekühlt und geschmiert. Ferner wird mittels des Niederdruckkreises 14 die Wärme abgeführt, die in den zwei Kupplungen des Doppelkupplungsgetriebes bei Differenzdrehzahlen als Reibarbeit entsteht.

Die benötigten Ölmengen werden durch die lokalen thermischen Zustände der Bauteile bestimmt. Die erforderliche externe Kühlleistung legt der globale thermische Zustand des Getriebes fest.

Im Hochdruckkreis 16 ist die primäre Zielsetzung der hydrostatische Druck. Der Bedarf an Drucköl, das die Verstellpumpe 20 liefern muß, ist vom Zustand von Stellantrieben für das Vorgelegegetriebe (Schalt- bzw. Getriebeaktuatoren) und die Kupplungen sowie vom Einsatz des Energiespeichers 28 bestimmt.

Ohne den Einsatz des Energiespeichers schwankt der Bedarf an Drucköl bei der vorliegenden Ausführungsform etwa zwischen 1 l/min und 12 l/min. Ein Volumenstrom von 1 l/min wird zum Ausgleich von Leckagen bei Schaltpausen benötigt. Im Schaltvorgang steigt aufgrund der benötigten Dynamik der Antriebe der Bedarf auf 12 l/min.

Durch den Einsatz des Energiespeichers 28 sinkt der Bedarf an Drucköl im Schaltvorgang auf einen maximalen Ladevolumenstrom von z.B. 4 1/min. Dieser ist zum Ausgleich der Ölverluste vollkommen ausreichend.

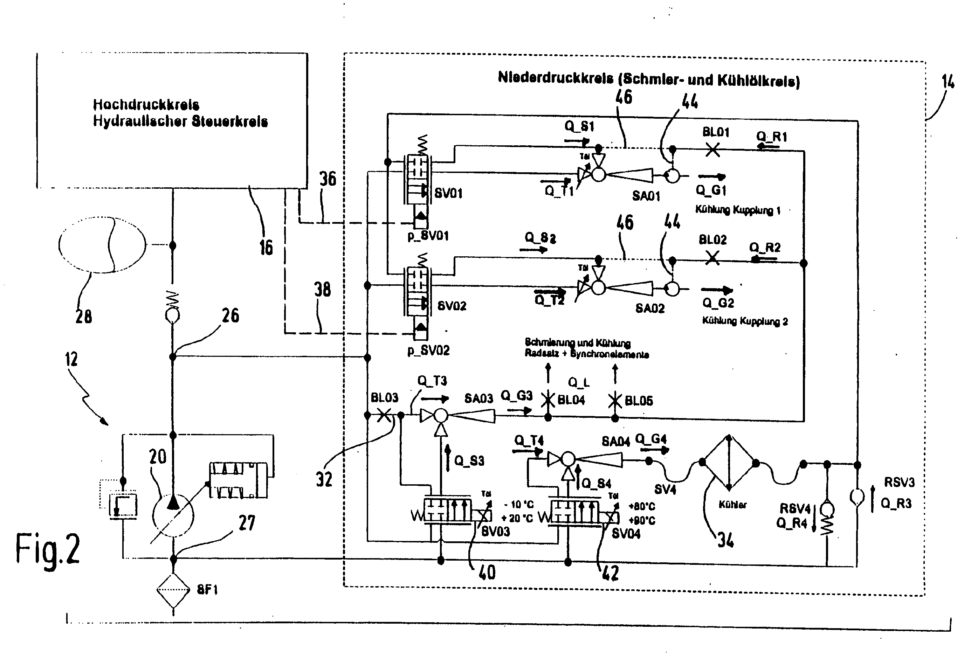

Fig. 2 zeigt eine Ausführungsform eines Niederdruckkreises 14 für die hydraulische Schaltung 10, die in Fig. 1 gezeigt ist.

Der Niederdruckkreis 14 ist einerseits angeschlossen an den Ausgang 26 der Verstellpumpe 20 und andererseits an den Eingang 27 der Verstellpumpe 20. Der Eingang 27 der Verstellpumpe 20 ist über ein Filter SF1 mit dem Ölsumpf verbunden.

Der Niederdruckkreis 14 weist vier parallel angeordnete Strahlpumpen bzw. Strahlapparate SA01, SA02, SA03 und SA04 auf.

Die Strahlpumpen sind triebstromseitig parallel mit dem Ausgang 26 der Verstellpumpe 20 verbunden. Die jeweiligen Saugstromseiten der Strahlpumpen SA sind parallel an den Eingang 27 der Verstellpumpe 20 angeschlossen.

Die Verbindungen zwischen dem Eingang 27 und dem Ausgang 26 sowie den Triebstrom- und den Saugstromseiten der Strahlpumpen SA sind schaltbar ausgebildet. Zu diesem Zweck sind vier Schaltventile SV01, SV02, SV03 und SV04 in der Form von 4/2-Wegeventilen vorgesehen.

Die Schaltventile SV sind identisch ausgebildet. In einer durch eine Feder vorbelasteten Grundstellung sind jeweils der Treibstromanschluß und der Saugstromanschluß der betreffenden Strahlpumpe SA von dem Ausgang 26 bzw. dem Eingang 27 getrennt. In der zweiten Stellung der Schaltventile SV ist die Treibstromseite jeweils mit dem Ausgang 26 verbunden, die Saugstromseite jeweils mit dem Eingang 27.

Die Strahlpumpen SA01 und SA02 dienen der Kühlung der zwei Kupplungen des Doppelkupplungsgetriebes. Zu diesem Zweck sind die Schaltventile SV01 und SV02 hydraulisch gesteuert (p_SV01, p_SV02). Sofern die Kupplung 1 des Doppelkupplungsgetriebes zu kühlen ist, wird das Schaltventil 01 geschaltet. In den Triebstromanschluß der Strahlpumpe SA01 fließt ein Volumenstrom Q_T1, in Saugstromanschluß ein Volumenstrom Q_S1. Durch die Wirkung der Strahlpumpe werden diese beiden Volumenströme gemischt und die Kupplung 1 wird mit einem Gemischvolumenstrom Q_G1 gekühlt.

Unabhängig von der Kühlung der Kupplung 1 erfolgt die Kühlung der Kupplung 2 in analoger Weise über das Schaltventil SV02.

Die Strahlpumpe SA03 dient zur Schmierung und Kühlung des Radsatzes und der Synchronelemente bzw. Synchroneinheiten des Vorgelegegetriebes des Doppelkupplungsgetriebes.

Das zugehörige Schaltventil SV03 ist temperaturgesteuert und kann bspw. im Bereich von -10°C bis +20°C geschaltet werden. Typische Schwellwerte sind 0°C oder +10°C.

Mit anderen Worten ist bei tiefen Temperaturen unterhalb der Schwelltemperatur das Schaltventil SV03 geschlossen. Im geöffneten Zustand fließt in die Triebstromseite der Strahlpumpe SA03 ein Volumenstrom O_T3, in die Saugstromseite ein Volumenstrom Q_S3. Aus der Strahlpumpe SA03 tritt ein Gemischvolumenstrom Q_G3 aus. Im Regelfall ist dieser Volumenstrom Q_G3 gleich einem Volumenstrom Q_L für die Schmierung und Kühlung des Vorgelegegetriebes. Der Volumenstrom Q_L kann bspw. über eine Mehrzahl paralleler Leitungen und Blenden BL04, BL05 an das Getriebe geleitet werden.

Zur Bereitstellung einer Schmierung für das Getriebe auch unterhalb der durch das Schaltventil SV03 eingestellten Schwelltemperatur ist die Triebstromseite der Strahlpumpe SA03 parallel zu dem Schaltventil SV03 über einem Parallelzweig 32 mit dem Ausgang 26 der Verstellpumpe 20 verbunden. In dem Parallelzweig 32 ist eine Blende BL03 angeordnet. Über den Parallelzweig 32 fließt ständig ein Volumenstrom in die Strahlpumpe SA03. Unterhalb der Schwelltemperatur fließt dieser Volumenstrom direkt durch die Strahlpumpe SA03 und dient als Grundvolumenstrom zur Schmierung von Bauelementen des Getriebes. Aufgrund der Tatsache, daß die Saugstromseite der Strahlpumpe SA03 unterhalb der Schwelltemperatur durch das Schaltventil SV03 geschlossen ist, besteht keine Gefahr, daß ein Teil des über den Parallelzweig 32 eingeführten Ölstromes aufgrund eines Staudruckes über die Saugstromseite abfließt. Folglich ist unterhalb der Schwelltemperatur der Ausgangsvolumenstrom Q_G3 gleich dem Eingangsvolumenstrom Q_T3.

Das vierte Schaltventil SV04 ist der vierten Strahlpumpe SA04 zugeordnet und ist ebenfalls temperaturgesteuert ausgestaltet. Unterhalb eines Schwellwertes von bspw. 90° (der Schwellwert kann bspw. zwischen 80° und 90° einstellbar sein) ist das Schaltventil SA04 geschlossen und die Strahlpumpe SA04 außer Betrieb. Oberhalb dieser zweiten Schwelltemperatur arbeitet die Strahlpumpe SA04 und der ausgangsseitige Gemischvolumenstrom Q_G4 wird an einem Ölkühler 34 geleitet. Der Ausgang des Ölkühlers 34 ist über ein Rückschlagventil RSV4 mit dem Ölsumpf (Eingang 27) verbunden, und in der Regel fließt folglich ein gekühlter Volumenstrom Q_R4 über das Rückschlagventil RSV4 in den Ölsumpf. Der Volumenstrom Q_R4 ist in der Regel gleich dem Volumenstrom Q_G4.

Die hydraulische Steueranschlüsse p_SV01 und p_SV02 der Schaltventile SV01 bzw. SV02 sind über hydraulische Steuerleitungen 36 bzw. 38 mit dem Hochdruckkreis 16 verbunden. Die Funktion der Leitungen 36, 38 wird nachstehend noch im Detail erläutert. Generell erfolgt ein Schaltsignal über eine der Leitungen 36, 38 dann, wenn eine der zwei Kupplungen des Doppelkupplungsgetriebes betätigt wird und aufgrund der dabei anfallenden Reibarbeit Wärme entsteht, die durch geeignete Kühlmaßnahmen abzuführen ist.

Die Temperatursteuerung des Schaltventils SV03 ist in Fig. 2 bei 40 gezeigt, die Temperatursteuerung des Schaltventils SV04 bei 42.

Der Ausgang des Ölkühlers 34 ist an die Leitung angeschlossen, die von dem Eingang 27 der Verstellpumpe 20 zu den Saugstromanschlüssen der Schaltventile SV01, SV02 führt. Zwischen diesem Anschluß und dem Eingang 27 ist ein weiteres Rückschlagventil RSV3 geschaltet, das gewährleistet, daß über die Saugstromanschlüsse der Schaltventile SV01, SV02 kein Rückfluß in den Ölsumpf erfolgen kann. Das Rückschlagventil RSV3 ist nicht federbelastet, das Rückschlagventil RSV4 hingegen schon.

Ferner ist in Fig. 2 gezeigt, daß der Ausgangsvolumenstrom Q_G3 der Strahlpumpe SA03 zur Einrichtung einer Grundschmierung der Kupplungen 1 und 2 aufgeteilt wird in dem Volumenstrom Q_L für das Getriebe und einen Volumenstrom Q_R1 für die Kupplung 1 und einen Volumenstrom Q_R2 für die Kupplung 2.

Zu diesem Zweck ist der Ausgang der Strahlpumpe SA03 entweder (über eine jeweilige Leitung 44) verbunden mit den Ausgangsseiten der Strahlpumpen SA01, SA02. Alternativ hierzu kann der Ausgang der Strahlpumpe SA03 auch (über jeweilige Leitungen 46) mit den Saugstromseiten der Strahlpumpen SA01, SA02 verbunden sein. In den Zuleitungen von dem Ausgang der Strahlpumpe SA03 zu den Strahlpumpen SA01, SA02 ist jeweils eine Blende BL01 bzw. BL02 vorgesehen.

Im vorliegenden Fall wird für die weitere Diskussion angenommen, daß die erste Schwelltemperatur des Schaltventils SV03 0°C ist und die zweite Schwelltemperatur des Schaltventils SV04 90°C. Werte unterhalb der ersten Schwelltemperatur werden als kalt bezeichnet, Werte zwischen den zwei Schwelltemperaturen als warm und Werte oberhalb der zweiten Schwelltemperatur als heiß.

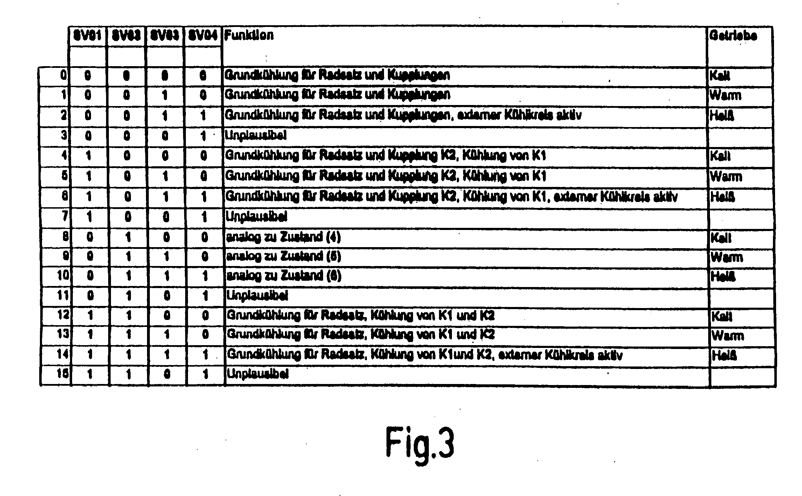

Die Funktionsweise des Niederdruckkreises 14 der Fig. 2 wird nachstehend anhand der Fig. 3 bis 6 erläutert.

Fig. 3 ist eine Tabelle der möglichen Betriebszustände der vier Schaltventile SV01 bis SV04.

Beispielsweise im Zustand 0, in dem alle vier Schaltventile SV ausgeschaltet sind, erfolgt eine Grundkühlung des Radsatzes und der Kupplungen über den Parallelzweig 32 und die Strahlpumpe SA03. Wenn es warm wird, wird die Strahlpumpe SA03 über das Schaltventil SV03 eingeschaltet. In diesem Zustand wird der triebstromseitige Ölvolumenstrom Q_T3 mit einem - größeren - Saugvolumenstrom Q_S3 gemischt, und es wird ein insgesamt größerer Volumenstrom Q_G3 für den Radsatz und die Kupplungen bereitgestellt.

Sofern es heiß wird, wird auch das Schaltventil SV04 zugeschaltet, und das Öl wird über den Kühler 34 gekühlt und gelangt über das Rückschlagventil RSV4 wieder in den Ölsumpf und wird dort mit dem heißen Öl gemischt.

Die Zustände 4 bis 6 betreffen entsprechende Zustände des Niederdruckkreises 14, wobei zusätzlich die Kupplung 1 gekühlt wird (das Schaltventil SV01 ist eingeschaltet). Entsprechend ist in den Zuständen 8 bis 10 das Schaltventil SV02 zur Kühlung der Kupplung 2 eingeschaltet. In den Zuständen 12 bis 14 werden beide Kupplungen gekühlt.

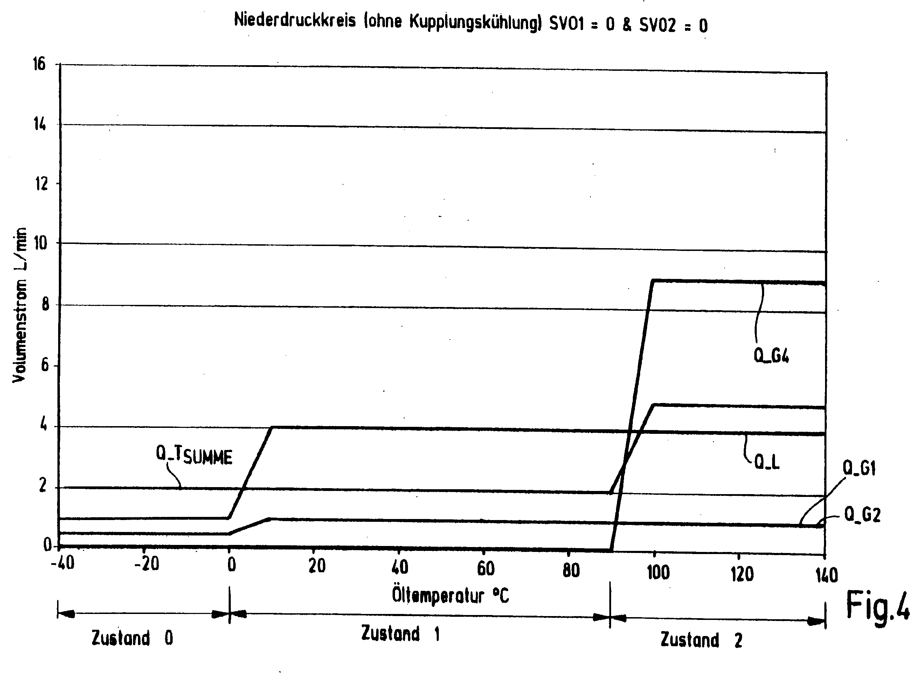

Die Zustände 0, 1 und 2 sind in Fig. 4 in einer Darstellung des Volumenstroms in 1/min über der Öltemperatur in °C gezeigt.

Dabei ist zu erkennen, daß die Volumenströme Q_L, Q_G1 und Q_G2 unterhalb der ersten Schwelltemperatur von 0°C bei etwa 1 1/min bzw. 0,5 l/min liegen (die Versorgung erfolgt über den Zweig 32 mit der Blende BL03). Im warmen Betriebszustand "1" steigen die Volumenströme auf etwa 4 1/min bzw. 1 l/min an. Im heißen Zustand wird über die Strahlpumpe SA04 ein Gemischvolumenstrom Q_G4 von 9 l/min gefördert und über den Kühler 34 gekühlt. Die Summe aller Triebströme Q_Tₛᵤₘₘₑ ist in Fig. 4 ebenfalls dargestellt.

Die Blende BL03 steuert den Ölbedarf auf einen Volumenstrom von etwa 2 l/min. Dieser Volumenstrom wird auf das Getriebe und die Kupplungen verteilt. Im warmen Zustand wird von der dann arbeitenden Strahlpumpe SA03 ein Volumenstrom von 4 l/min angesaugt, so daß sich ein Gemischvolumenstrom Q_G3 von 6 l/min ergibt.

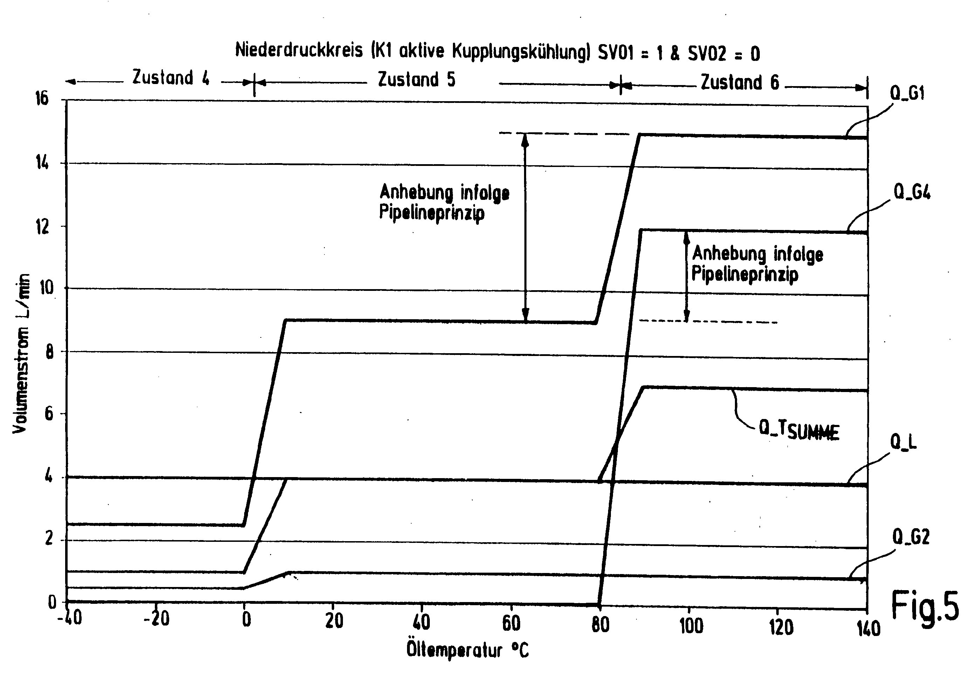

Fig. 5 zeigt eine ähnliche Darstellung wie Fig. 4, jedoch für die Zustände 4 bis 6.

Es versteht sich, daß die Darstellung der Zustände 8 bis 10 identisch ist wie die Zustände 4 bis 6, wobei jedoch die Volumenströme Q_G1 und G_G2 vertauscht sind.

Es ist zu erkennen, daß aufgrund der Verbindung des Ausgangs des Kühlers 34 und der Saugstromseite der Strahlpumpen SA01, SA02 im heißen Zustand aufgrund des "Pipeline-Prinzips" der Ausgangsvolumenstrom Q_G1 für die Kupplung 1 auf ca. 15 l/min angehoben wird. Aufgrund der Tatsache, daß am Ausgang der Strahlpumpe SA04 dabei über die Saugstromseite der Strahlpumpe SA01 eine Saugwirkung auftritt, wird auch der Ausgangsvolumenstrom Q_G4 gegenüber der Darstellung der Fig. 4 angehoben, auf 12 l/min.

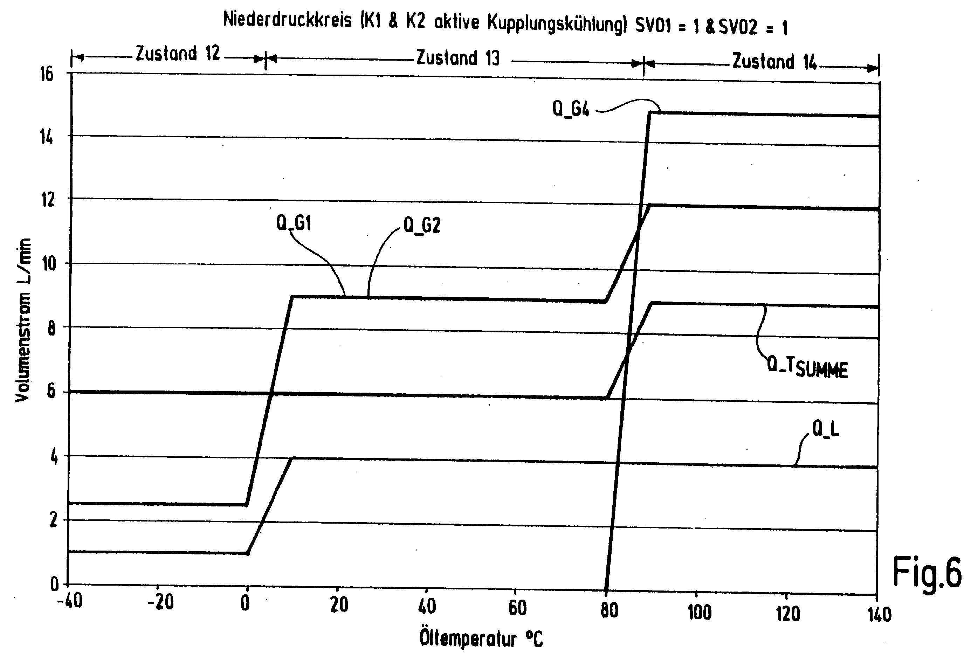

Fig. 6 schließlich zeigt die Zustände 12 bis 14, bei denen beide Kupplungen gekühlt werden.

Auch hier ist das Pipeline-Prinzip erkennbar. Aufgrund der Saugwirkung der zwei Strahlpumpen SA01, SA02 wird der Ausgangsvolumenstrom Q_G4 der Strahlpumpe SA04 auf 15 l/min angehoben. Für die Kupplungen ergibt sich im heißen Zustand somit jeweils noch ein Gemischvolumenstrom von 12 l/min.

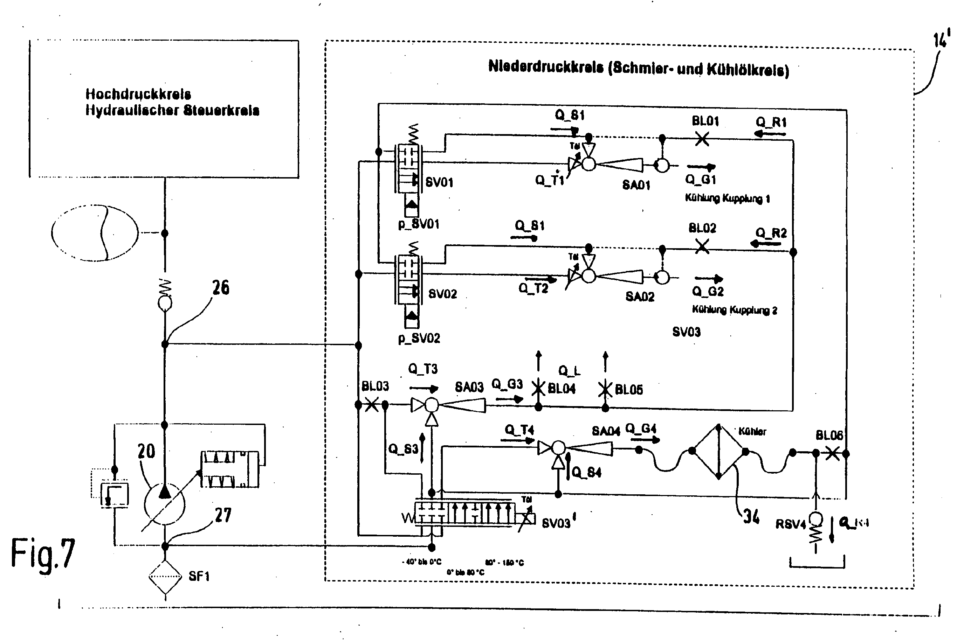

Fig. 7 zeigt eine Abwandlung eines Niederdruckkreises 14'.

Der Aufbau und die Funktionsweise des Niederdruckkreises 14' ist identisch wie bei dem Niederdruckkreis 14 der Fig. 2.

Statt der Schaltventile SV03 und SV04 ist jedoch ein einzelnes Schaltventil SV03' vorgesehen, das als 6/3-Wegeventil ausgebildet ist. Die erste Schaltstellung wird im kalten Betriebszustand angewandt (z.B. von -40°C bis 0°C), die zweite Schaltstellung im warmen Betriebszustand (bspw. von 0°C bis 80°C) und die dritte Schaltstellung im heißen Zustand (bspw. von 80°C bis 150°C). Oberhalb von heißen Temperaturen wird unabhängig von dem Schaltventil SV03' ein Störungssignal abgegeben.

Zwei der eingangsseitigen Anschlüsse des Schaltventils SV03' sind mit dem Ausgang 26 der Verstellpumpe 20 verbunden. Ein mittlerer Eingangsanschluß ist mit dem Ölsumpf (dem Eingang der Verstellpumpe 20) verbunden.

Zwei Ausgangsanschlüsse des Schaltventils SV03' sind mit der Triebstromseite des Schaltventils SA03 bzw. der Triebstromseite des Schaltventils SA04 verbunden. Ein dritter Ausgangsanschluß ist parallel mit den Saugstromseiten der Strahlpumpen SA03, SA04 verbunden.

Ferner ist der dritte Ausgang des Schaltventils SV03' mit den Saugstromeingängen der Schaltventile SV01, SV02 verbunden. Es ist folglich kein Rückschlagventil RSV3 vorzusehen, wie in der Ausführungsform der Fig. 2. Der Ausgang des Kühlers 34 ist über eine Blende BL06 an die Zuführleitung von dem Schaltventil SV03' zu den Schaltventilen SV01, SV02 angeschlossen.

Die Temperatur des Umschaltens in den zweiten Betriebsstand des Schaltventils SV03' wird durch die Sauggrenze der ungünstigsten Strahlpumpe bestimmt. Über die Blende BL06 können die Strahlpumpen SA01 und SA02 das gekühlte Öl aus dem Kühler 34 direkt ansaugen.

Die thermische Steuerung der Schaltventile SV03, SV04 bzw. SV03' kann bspw. über Dehnstoffelemente erfolgen, oder über Bimetallschalter.

Generell versteht sich, daß bei geringeren Öltemperaturen, z.B. im kalten Zustand, das Kühlöl eine größere Wärmemenge aufnehmen kann und folglich geringere Kühlvolumenströme erforderlich sind.

Für die Aufheizphase des Getriebes ist eine Aktivierung beider Kühlölströme der Kupplung außerhalb der Schaltvorgänge zu empfehlen.

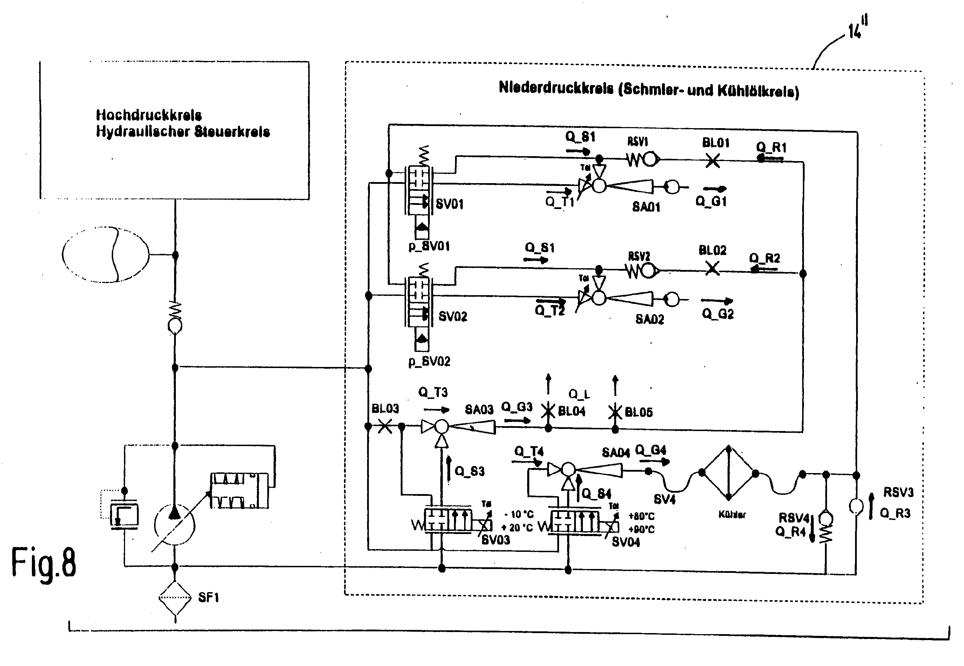

Fig. 8 zeigt schließlich eine weitere alternative Ausführungsform eines Niederdruckkreises 14''. Der Niederdruckkreis 14'' entspricht weitgehend dem Niederdruckkreis 14 der Fig. 2. Der Ausgangsgemischvolumenstrom Q_G3 aus der Strahlpumpe SA03 wird aufgeteilt in die Versorgung des Getriebes (Q_L) und in Volumenströme Q_R1 bzw. Q_R2 für die Sauganschlüsse der Strahlpumpen SA01, SA02. Dabei ist zwischen den Ausgang der Strahlpumpe SA03 und die Saugstromseite der Strahlpumpen SA01, SA02 jeweils ein Rückschlagventil RSV1 bzw. RSV2 geschaltet. Die Rückschlagventile RSV1, RSV2 sind federbelastet.

Die Funktionsweise entspricht im übrigen der Funktionsweise des Niederdruckkreises 14 der Fig. 2.

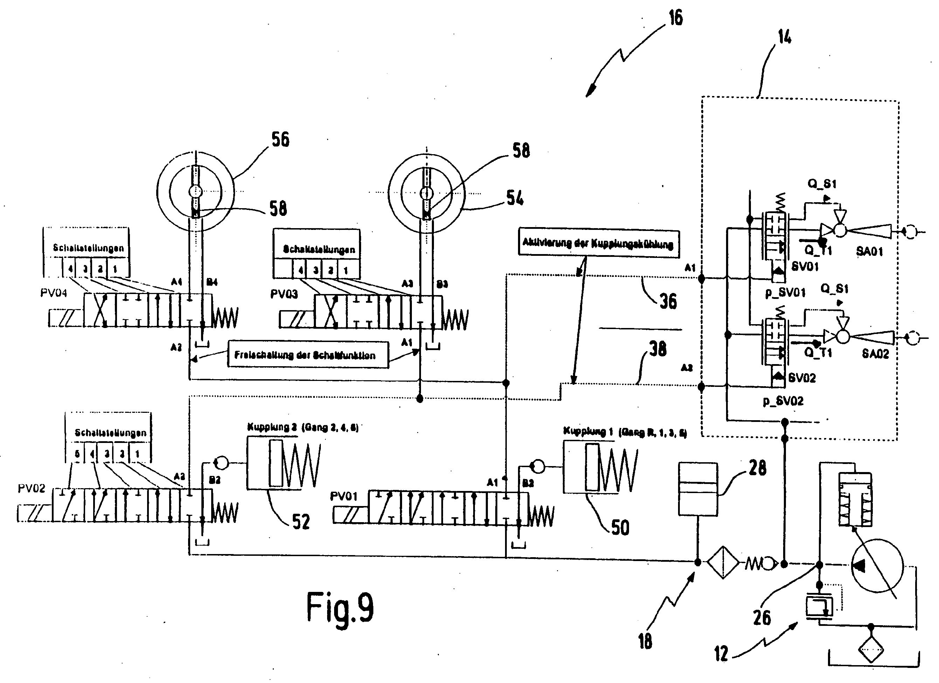

Fig. 9 zeigt ein Ausführungsbeispiel eines Hochdruckkreises 16 der hydraulischen Schaltung 10 der Fig. 1.

Der Hochdruckkreis 16 dient zur Ansteuerung von zwei Aktuatoren 50, 52 für die Kupplung 1 bzw. die Kupplung 2, sowie von zwei Aktuatoren 54 bzw. 58 für Schaltkupplungen des Vorgelegegetriebes.

Die Aktuatoren 50, 52 sind als einfach wirkende Kolben-/Zylindereinheiten ausgebildet. Die von dem Aktuator 50 angesteuerte Kupplung 1 dient zum Ein- und Auslegen der Gänge 1, 3, 5 und des Rückwärtsganges. Die über den Aktuator 52 angesteuerte Kupplung 2 dient zum Ein- und Auslegen der Gänge 2, 4 und 6.

Die Aktuatoren 54, 56 des Vorgelegegetriebes sind als hydraulische Drehantriebe ausgebildet. Der Aktuator 54 dient zum Schalten der Gänge 1, 3, 5 und des Rückwärtsganges, der Aktuator 56 zum Schalten der Gänge 2, 4 und 6.

Die Aktuatoren 54, 56 dienen dabei zum Drehantrieb von Schaltwalzen, die vorzugsweise als Einspurwalzen ausgebildet sind. Mit diesem Antriebskonzept sind die Gangstufen einer Kupplung zusammengefaßt steuerbar. Doppelrückschaltungen und Dreifachrückschaltungen sind ohne zwischenzeitliche Synchronisierungsvorgänge ausführbar.

Dreifachschaltungen sind dabei sogar als Lastschaltungen ausführbar. Doppelschaltungen (unter Überspringen eines Ganges, bspw. von 2 nach 4) sind folgendermaßen ausführbar. Während des Ein- und Auslegens des alten (z.B. zweiten) und des neuen (z.B. vierten) Ganges mittels des Aktuators 56, wobei eine Zugkraftunterbrechung eintritt, wird über den zweiten Zweig mittels des Aktuators 54 kurzzeitig ein weiterer Gang eingeschaltet, bspw. der Gang 5. Hierdurch erfolgt eine Zugkraftunterstützung während des Schaltvorganges von bspw. 2 nach 4 (allerdings nur mit dem Moment des fünften Ganges (oder sechsten Ganges).

Die hydraulischen Aktuatoren 54, 56 haben gegenüber elektromotorischen Antrieben einige Vorteile:
1. Die Masse ist geringer.
2. Die Dynamik ist gesteigert und die Schaltzeiten werden verkürzt.
3. Die Anordnung im Getriebe ist flexibel.
4. Es ist ein geringer Bauraum notwendig.
5. Der elektrische Strombedarf ist gering (z.B. Nennstrom 2 Ampere bei 12 Volt im Vergleich zu einem Elektromotor, der etwa 30 Ampere bei 12 Volt benötigt), und
6. es ist keine mechanische Übersetzung notwendig.

Eine hydraulische Antriebseinheit bestehend aus einem Wegeventil und einem hydraulischen Schwenkantrieb wiegt etwa 1000 g. Ein vergleichbarer elektromechanischer Antrieb bestehend aus einem Elektromotor, einem Lagerblock, einer Stirnradstufe und einer Schaltwalze wiegt etwa 2500 g.

Die Ansteuerung der zwei Kupplungsaktuatoren 50, 52 erfolgt über jeweils ein proportionales 4/5-Wegeventil PV01 bzw. PV02.

Eingangsseitig sind die Wegeventile PV01, PV02 jeweils verbunden mit dem Energiespeicherabschnitt 18 und dem Ölsumpf. Ein Ausgangsanschluß ist verbunden mit dem jeweiligen Aktuator 50 bzw. 52. Ein zweiter Ausgangsanschluß dient zur Realisierung einer Nebenfunktion. So ist der zweite Ausgangsanschluß A1 des Wegeventils PV01 für die Kupplung 1 verbunden mit der Steuerleitung 36 für das Schaltventil SV01 des Niederdruckkreises. Entsprechend ist der zweite Steuerausgang A2 des Wegeventils PV02 verbunden mit der Steuerleitung 38 für das zweite Schaltventil SV02 des Niederdruckkreises 14.

Zum zweiten sind die zweiten Steuerausgängen A1, A2 unmittelbar verbunden mit jeweiligen Eingängen von zwei proportionalen 4/4-Wegeventilen PV03, PV04 zur Ansteuerung der Schaltaktuatoren 54 bzw. 56, um diese bei Bedarf freizuschalten.

Ein zweiter Eingang der zwei Wegeventile PV03, PV04 ist mit dem Ölsumpf verbunden. Die Ausgänge A3, B3 bzw. A4, B4 der Ventile PV03, PV04 sind mit den Aktuatoren 54 bzw. 56 verbunden. Im Inneren der Aktuatoren ist aus vorliegend nicht näher interessierenden Gründen jeweils eine Blende 58 vorgesehen.

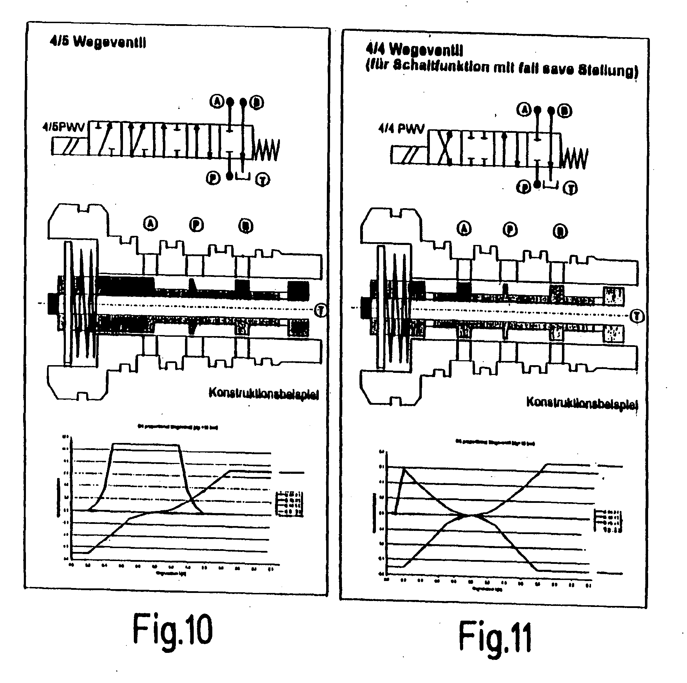

Der Aufbau der 4/5-Wegeventile PV01, PV02 ist in Fig. 10 gezeigt. Der Aufbau der proportionalen 4/4-Wegeventile PV03, PV04 ist in Fig. 11 gezeigt.

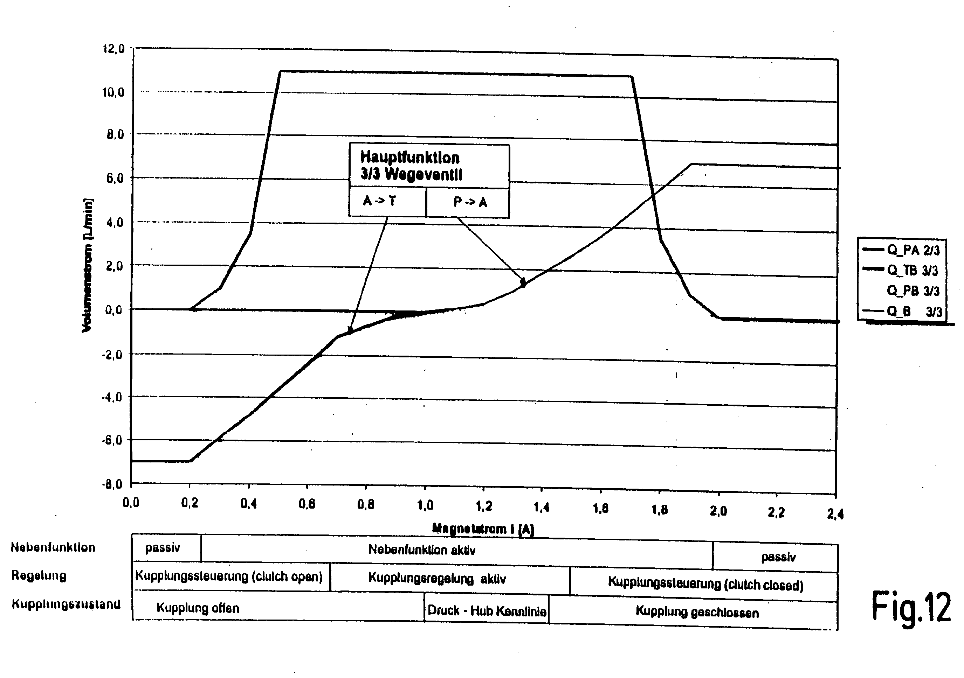

Die Kennlinie des in Fig. 10 gezeigten 4/5-Wegeventils für die Ventile PV01, PV02 ist als Volumenstrom über Magnetstrom (proportional zu Hub) in Fig. 12 dargestellt.

Es ist zu erkennen, daß die angeschlossene Kupplung im Bereich von 0 bis 1 Ampere offen ist und im Bereich von etwa 1,4 Ampere bis 2,4 Ampere geschlossen.

In dem Bereich zwischen 1 Ampere und 1,4 Ampere stellt sich eine bestimmte Druck-Hub-Kennlinie ein, mittels der der Schlupfzustand der Kupplung für Anfahrvorgänge und Gangwechsel geeignet gesteuert werden kann.

Dabei ist die Kupplungsregelung generell aktiv im Bereich zwischen etwa 0,7 Ampere und 1,5 Ampere.

Die eigentliche Regelung des Zustandes der Kupplung erfolgt mittels der mittleren drei Stellungen des proportionalen, magnetventilgesteuerten 4/5-Wegeventils. Zum Einstellen einer symmetrischen Nebenfunktion sind zwei weitere Schaltstellungen vorgesehen, und zwar in den jeweiligen Endlagen des 4/5-Wegeventils. In der durch eine Feder vorgespannten Grundstellung ist die Kupplung geöffnet, da der Steuerausgang B mit dem Ölsumpf verbunden ist. Die Nebenfunktion (Steuerausgang A) ist passiv. Dieser Zustand stellt sich von etwa 0 bis 0,25 Ampere ein.

In der anderen Endstellung ist die Nebenfunktion mittels des Steuerausgangs A ebenfalls passiv, die Kupplung ist jedoch geschlossen, da der Steuerausgang B mit dem Energiespeicherabschnitt 18 verbunden ist. Dieser Zustand stellt sich etwa von 2 bis 2,4 Ampere Magnetstrom ein.

Im Bereich von etwa 0,25 Ampere bis 2 Ampere ist die Nebenfunktion aktiv, der Steuerausgang A also mit dem Energiespeicherabschnitt 18 verbunden. In diesem Zustand wird die zugeordnete Kupplung gekühlt, und zwar gesteuert über die Leitungen 36 bzw. 38. Ferner ist bei aktiver Nebenfunktion die Schaltfunktion der zwei Aktuatoren 54, 56 freigeschaltet.

Mit anderen Worten ist in den Endlagen des Ventils der Steueranschluß A gesperrt und nur im mittleren Hubbereich mit dem Druckanschluß P verbunden. Der aktive Bereich der Kennlinie P -> A ist weiter als der Stellbereich gefaßt, den das Kupplungsventil zur Ausregelung der Kupplungsdrücke nutzt.

Diese Einteilung der aktiven Bereiche stellt sicher, daß im Regelbereich der Primärfunktion die Nebenfunktion permanent aktiv ist. Im steuerbaren Bereich der Primärfunktion kann die Nebenfunktion aktiv oder passiv sein. Eine Aktivierung der Nebenfunktion aus dem Ruhezustand der Kupplungen ist durch die Aufprägung eines bestimmten Magnetstroms zu erzielen. Im passiven Bereich der Nebenfunktion sind die Änderungen der Primärfunktion gering. Durch die Nebenfunktion läßt sich die Kupplungskühlung ohne zusätzliche Kühlölventile aktivieren.

Ferner läßt sich durch die Nebenfunktion der oder die Stellantriebe zur Betätigung der Synchronisierungen Sperren, Freischalten und/oder Auswählen.

Die Funktionsweise der Schaltventile PV03 und PV04 ist folgendermaßen. Der prinzipielle Aufbau der Kennlinie von Volumenstrom über Magnetstrom läßt sich dem Diagramm der Fig. 11 entnehmen. Bei einem sehr kleinen Volumenstrom ist das 4/4-Wegeventil aufgrund der Federvorbelastung generell inaktiv. Im aktiven Bereich, dem die anderen drei Schaltstellungen zugeordnet sind, ist eine mittlere Schaltstellung eine Stellung zum Halten des aktuellen Druckzustandes im Aktuator 54 bzw. 56, die anderen zwei Schaltstellungen dienen zum Bewegen des Aktuators in die eine Richtung und in die andere Richtung.

Auf diese Weise lassen sich die Aktuatorfunktionen mit einer sehr geringen Anzahl von Stellantrieben reduzieren.

Ein Stellantrieb soll die Position regeln und die Kraft dosieren. Denn Schaltvorgänge sollen schnell, präzise, leise und für die Synchroneinheit schonend ablaufen. Obgleich die Anzahl der Antriebe auf ein Minimum zu beschränken ist, soll eine hohe Flexibilität für zulässige Gangwechsel vorhanden sein.

Die Funktionsweise des Hochdruckkreises 16 bei einem Gangwechsel bspw. vom ersten in den zweiten Gang ist wie folgt. Im ersten Gang ist die Kupplung 1 geschlossen, die Nebenfunktion ist inaktiv, so daß der Aktuator 56 für die Gänge 2, 4 und 6 nicht freigeschaltet ist. Das Wegeventil PV01 befindet sich in Fig. 9 in der äußersten linken Stellung.

Das Wegeventil PV02 andererseits befindet sich in der äußersten rechten Stellung. Die Kupplung 2 ist geöffnet, die Nebenfunktion inaktiv. Daher ist auch der Aktuator 54 für die Gänge 1, 3 und 5 nicht freigeschaltet.

Zum Einleiten eines Gangwechsels in den zweiten Gang wird zunächst das Wegeventil PV01 in die benachbarte Position bewegt, so daß die Nebenfunktion (Steuerausgang A1) aktiv wird. Hierdurch wird der Aktuator 56 freigeschaltet. Durch geeignete Betätigung des Ventils PV04 wird der zweite Gang eingelegt.

Anschließend wird in überschneidender Art und Weise im Rahmen der jeweiligen Druck-Hub-Kennlinie die Kupplung 1 geöffnet und die Kupplung 2 geschlossen. Dies kann unter Last erfolgen. Es versteht sich, daß während der ganzen Zeit mittels der aktiven Nebenfunktion zunächst die Kupplung 1 und während der Überschneidung beide Kupplungen 1 und 2 gekühlt werden.

Am Ende des Gangwechsels ist der zweite Gang eingelegt, die Kupplung 2 geschlossen und die Kupplung 1 geöffnet.

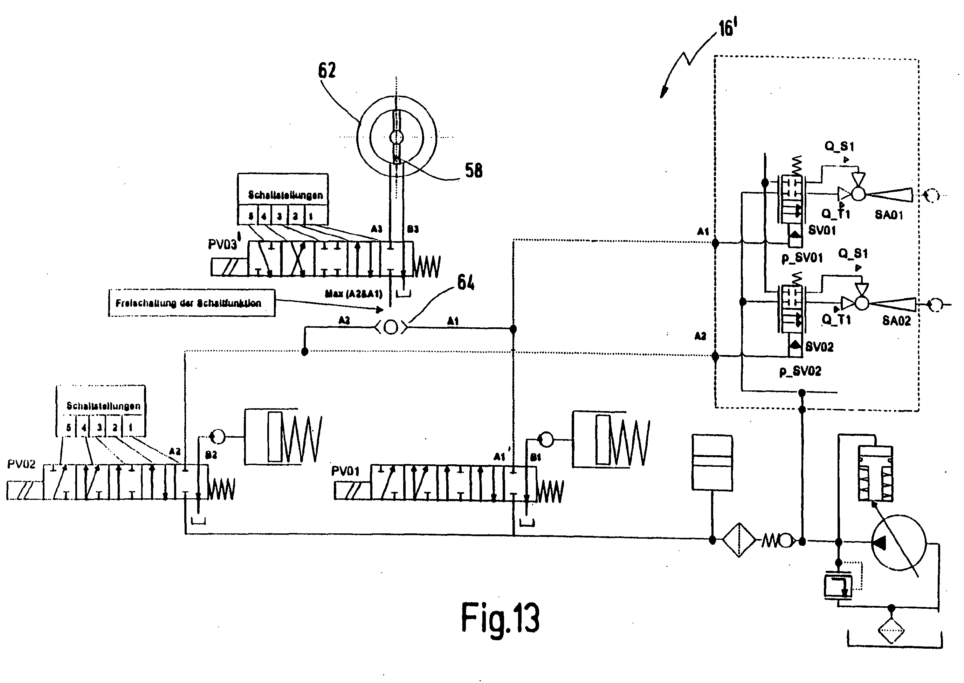

Fig. 13 zeigt eine alternative Ausführungsform eines Hochdruckkreises 16'.

Die Aktuatoren für die Kupplungen 1 und 2 sind identisch wie bei dem Hochdruckkreis 16. Für das Getriebe ist jedoch nur ein einzelner Schaltaktuator 62 vorgesehen, der eine einzelne Schaltwalze antreibt. Hierdurch wird die Anzahl der Freiheitsgrade gegenüber der Ausführungsform der Fig. 9 reduziert. Die Schaltwalze ermöglicht es, die Synchroneinheiten mechanisch zu koppeln und zudem gegeneinander zu sperren. Die Flexibilität ist eingeschränkt.

Andererseits ist zur Ansteuerung des Aktuators 62 nur ein einzelnes proportionales, magnetgesteuertes 4/5-Wegeventil PV03' notwendig. Die Freischaltung der Schaltfunktion über die Steuerausgänge A1, A2 der Wegeventile PV01, PV02 erfolgt mittels eines logischen Wechselventils 64. Danach wird die Schaltfunktion generell freigegeben, wenn die Nebenfunktion einer der zwei Wegeventile PV01, PV02 aktiv ist.

Es versteht sich, daß bei dem Aktuator 62 doppelte Rückschaltungen oder dreifache Rückschaltungen sequentiell ablaufen müssen, da die zugeordnete Schaltwalze alle sechs Gänge in aufeinanderfolgender Reihenfolge bedient, sowie auch den Rückwärtsgang.

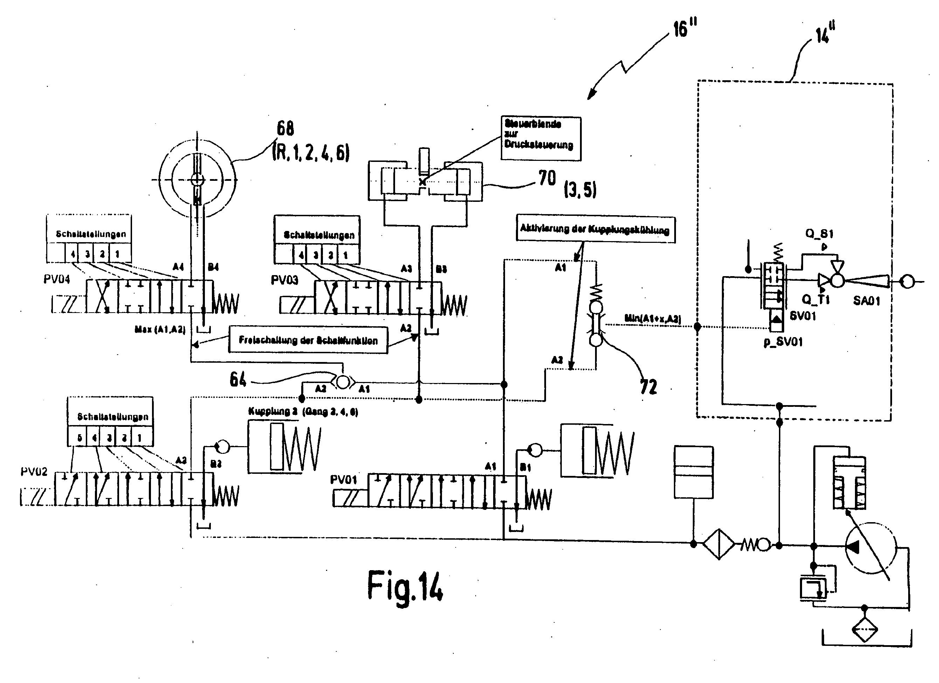

Fig. 14 zeigt eine weitere Ausführungsform, bei der ein Aktuator 68 für die Gänge R, 1, 2, 4 und 6 vorgesehen ist. Der Aktuator 68 ist als hydraulischer Schwenkantrieb ausgebildet und dient zum Antrieb einer Schaltwalze, die diese Gänge bedient.

Für die Gänge 3 und 5 ist ein hydraulischer Zylinderantrieb vorgesehen. Dies setzt voraus, daß die Gangstufen 3 und 5 von einer Synchroneinheit bedient werden.

Der Zylinderantrieb 70 ist gegenüber einem Drehantrieb einfacher herstellbar. Allerdings erlaubt diese Kombination von Stellantrieben für das Getriebe keine direkte Schaltung vom vierten in den ersten Gang.

Sowohl für den hydraulischen Drehantrieb 68 als auch für den hydraulischen Zylinderantrieb 70 ist jeweils ein proportionales, magnetgesteuertes 4/4-Wegeventil PV03 bzw. PV04 vorgesehen. Deren Funktion entspricht der der entsprechenden Schaltventile der Fig. 9.

Die Schaltventile PV01, PV02 sind identisch wie bei der Ausführungsform der Fig. 9. Kupplung 1 bedient die Gänge R, 1, 3, 5, Kupplung 2 die Gänge 2, 4, 6.

Die Freischaltung der Schaltfunktion des Aktuators 68 erfolgt über ein logisches Wechselventil 64. Der Aktuator 70 wird direkt mittels des Steuerausgangs A2 des Ventils PV02 freigeschaltet.

Im Unterschied zu den vorherigen Ausführungsformen ist bei der vorliegenden Ausführungsform im Niederdruckkreis 14" zur Kupplungskühlung nur eine Strahlpumpe SA01 mit vorgeschaltetem Schaltventil SV01 vorgesehen.

Die Aktivierung der Kupplungskühlung erfolgt entsprechend über ein logisches Minderventil 72, mit dem die Steuerausgänge A1 und A2 der Schaltventile PV01, PV02 verknüpft werden.

Dabei wird der niedrigere Druck zum Schaltventil SV01 geschaltet. Eine Feder kann eine Positionierung auf eine Endlage bei Druckgleichgewicht erzwingen. Dies bedeutet, daß nur bei Aktivierung beider Nebenfunktionen (Steueranschlüsse A1, A2) die Kühlung der zwei Kupplungen aktiv ist.

Die Steuerung der Schaltaktuatoren 68, 70 ist davon unberührt und kann durch Aktivierung einer Nebenfunktion immer mit passiver Kupplungskühlung erfolgen.

Bei der Ausführungsform der Fig. 14 macht die Bedingung, daß keine Gangstufe der Kupplung bei aktiver Kupplungskühlung zu schalten ist, für diesen Sonderfall die Einführung des logischen Wechselventils 64 erforderlich. Das Ventil 64 ermöglicht einen. Gangwechsel R und 1 durch die Aktivierung der Nebenfunktion des Ventils PV02 und einen Gangwechsel auf 2, 4 und 6 durch das Ventil PV01.

Die Kupplungsventile PV01, PV02 regeln den Druck im Stellzylinder der jeweiligen Kupplungen und steuern die Kühlung und Logikfunktionen im Getriebe. Die Kupplungsventile PV01, PV02 schalten den Schaltaktuator für die Gangstufen der jeweiligen anderen Kupplung und den Systemdruck frei. Die Wirkung der Schleppleistung bei aktiver Kupplungskühlung verlängert bei Schaltungen das Angleichen der Drehzahlen in einer Synchroneinheit. Dies bedingt die Asymmetrie der Steuerung von Kupplungskühlung und Schaltaktuator.

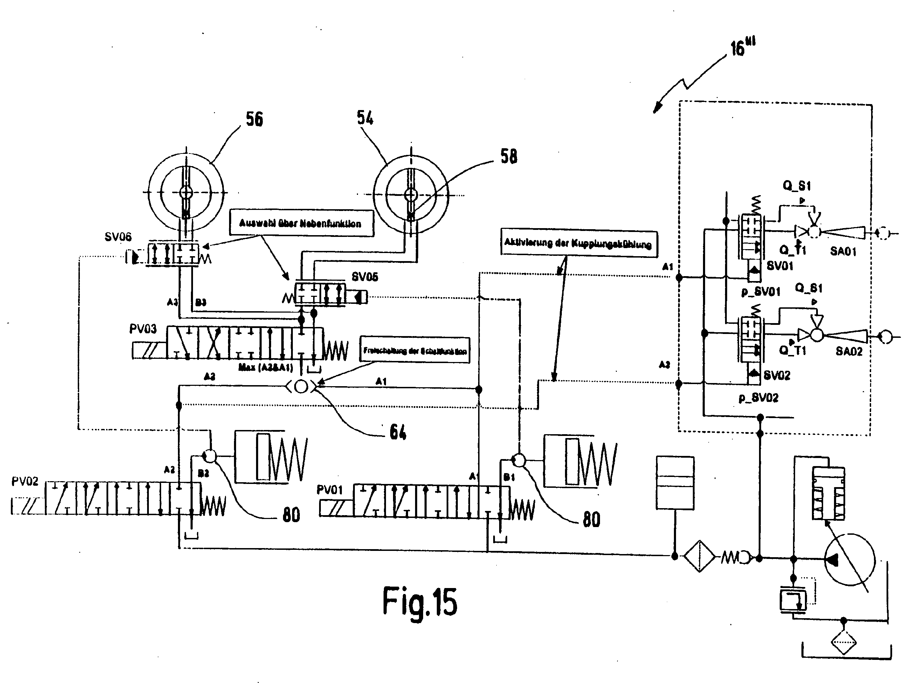

Fig. 15 zeigt eine weitere alternative Ausführungsform, die der Ausführungsform der Fig. 9 ähnlich ist.

Die zwei Aktuatoren 54, 56 für die Schaltfunktion werden mittels eines einzelnen 4/5-Wegeventils PV03' gesteuert. Die Freigabe des jeweiligen Aktuators 54, 58 erfolgt durch zusätzliche Schaltventile SV05, SV06, die zwischen das Wegeventil PV03 und den Aktuator 54 bzw. zwischen das Wegeventil PV03 und den Aktuator 56 geschaltet sind. Die Aktivierung der Schaltventile SV05, SV06 erfolgt über jeweilige Steuerglieder bzw. Abgriffe 80, die zwischen die Kupplungen 1, 2 bzw. die Steuerausgänge B1 bzw. B2 der Wegeventile PV01, PV02 geschaltet sind.

Dabei sind die Schaltventile SV05 und SV06 in der Ausgangsstellung jeweils auf aktiv geschaltet.

So wird bspw. das Schaltventil SV05 dann geschlossen und der Aktuator 54 für die Gänge 2, 4 und 6 gesperrt, wenn der Kupplungsdruck der Kupplung 1 (für die Gänge R, 1, 3, 5) einen bestimmten Wert erreicht, die Kupplung 1 also bspw. geschlossen ist.

Generell erfolgt die Freigabe der Schaltfunktion durch eine Kombination der Steuerausgänge A1 und A2 mittels eines logischen Wechselventils 64, das den höheren der beiden Drücke A1, A2 an das Schaltventil PV03' durchleitet.

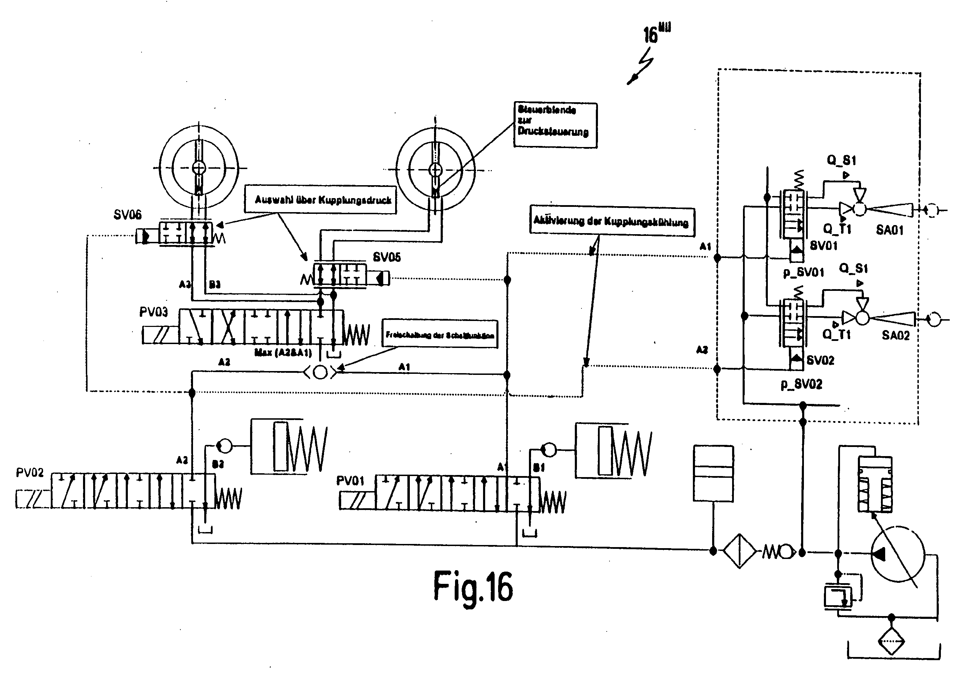

Fig. 16 zeigt eine alternative Ausführungsform eines Hochdruckkreises 16"". Der Aufbau und die verwendeten Elemente sind identisch wie bei dem Hochdruckkreis 16''' der Fig. 15.

Die Schaltventile SV05, SV06 werden jedoch über die Nebenfunktion der Kupplungsventile PV01, PV02 angesteuert und nicht über den Kupplungsdruck.

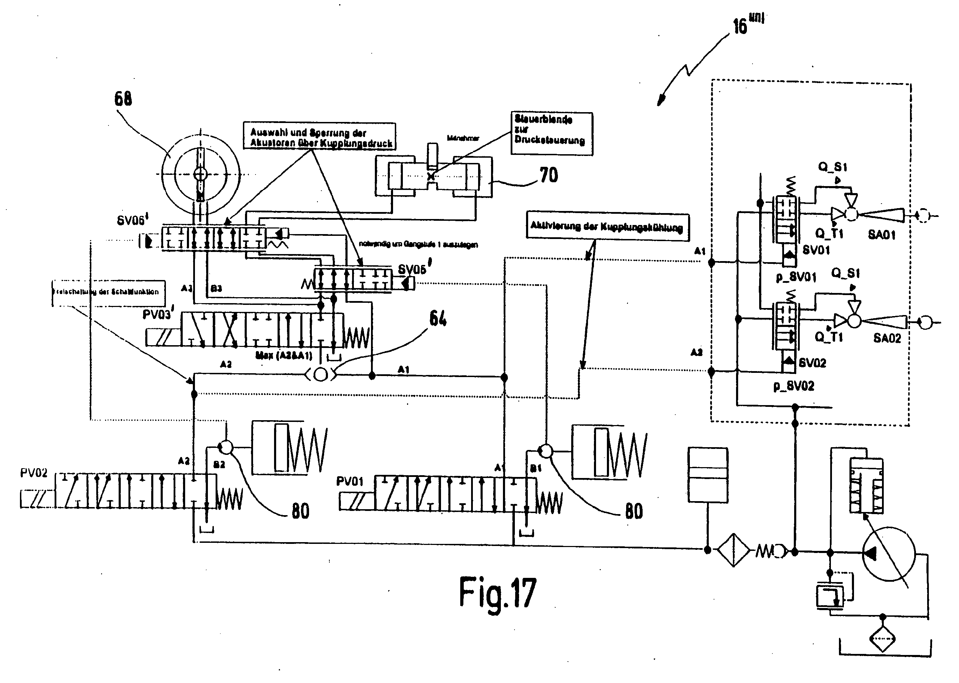

Fig. 17 zeigt eine weitere alternative Ausführungsform eines Hochdruckkreises 16'''''.

Diese Ausführungsform basiert auf der Ausführungsform 16" der Fig. 14, wobei ein Aktuator 68 für die Gänge R, 1, 2, 4, 6 vorgesehen ist, und ein Zylinderantrieb 70 für die Gänge 3 und 5.

Auch bei dieser Ausführungsform erfolgt die Ansteuerung der Aktuatoren 68, 70 nur über ein einzelnes proportionales, magnetventilgesteuertes 4/5-Wegeventil PV03' (ähnlich wie bei der Ausführungsform der Fig. 15 und 16).

Zur Auswahl und Sperrung der Aktuatoren 68 und 70 über den Kupplungsdruck (Elemente 80) sind zwei Schaltventile SV05' und SV06' vorgesehen. Das Schaltventil SV05' ist ein 6/2-Wegeventil und ist im passiven Zustand durchgeschaltet. Zwei der Ausgänge des Schaltventils SV05' sind an zwei Eingängen des Schaltventils SV06' durchgeschleift. Ein Ausgang dient als Steuereingang für das Schaltventil SV06', der die Federvorbelastung dieses Schaltventils unterstützt.

Das Schaltventil SV06' ist als 8/2-Wegeventil ausgebildet und ermöglicht alternativ eine Freigabe des Aktuators 68 (in Fig. 17 gezeigt) oder eine Freigabe des Aktuators 70. Eine Freigabe des Aktuators 70 erfolgt über einen Steuerausgang, der auf dem Kupplungsdruck der Kupplung 2 für die Gänge 2, 4 und 6 basiert.

Die Freigabe der Schaltfunktion insgesamt erfolgt wiederum über ein logisches Wechselventil 64.

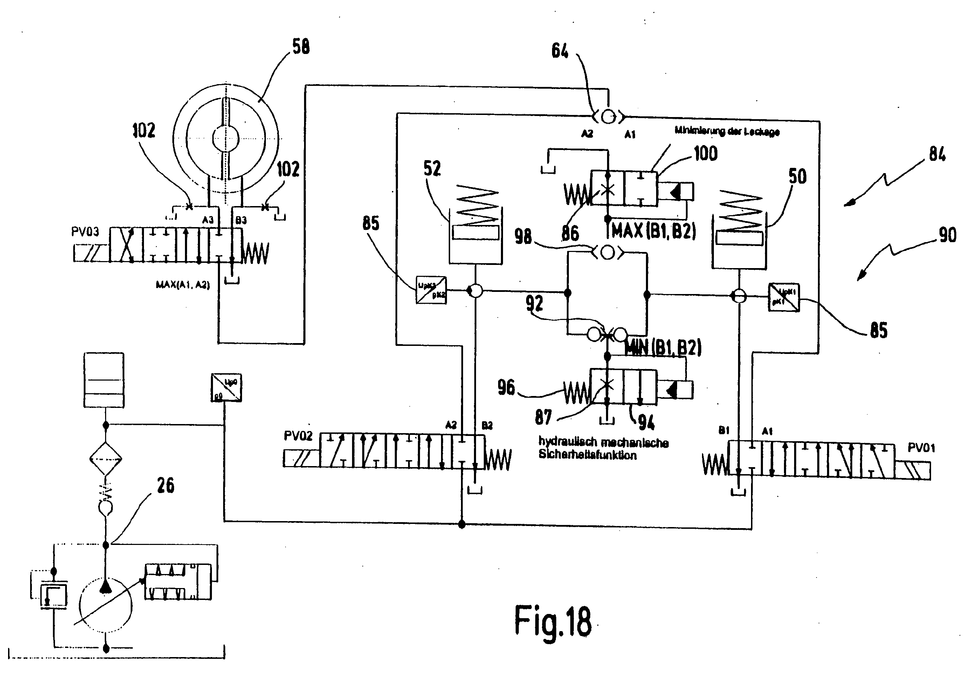

Fig. 18 zeigt eine hydraulische Sicherheitseinrichtung 90, die mit dem Hochdruckkreis 16' der Fig. 13 kombiniert ist.

Die Sicherheitseinrichtung 90 dient dazu, ein gleichzeitiges vollkommenes Schließen der zwei Kupplungen 1, 2 mittels der Aktuatoren 50, 52 zu vermeiden. Hierdurch können Getriebeblockagen vermieden werden.

Zu diesem Zweck werden die Kupplungsdrücke, die über die Steuerausgänge B1 bzw. B2 an die Kupplungsaktuatoren 50, 52 geleitet werden, in einem logischen Minderventil 92 verglichen. Der kleinere der zwei Drücke wird an ein federvorbelastetes Sicherheitswegeventil 94 gegeben. Das Ventil 94 ist durch eine Feder 96 vorgespannt, die einem voreingestellten Druck von z.B. 7,5 bar entspricht. Dabei entspricht ein Druck von 10 bar einem vollkommenen Schließen der Kupplungen.

Wenn der geringere der zwei Kupplungsdrücke folglich einen Wert von bspw. 7,5 bar gegen die Kraft der Feder 96 überschreitet, schaltet das Ventil 94 auf hydraulischem Wege über den zugeordneten Steueranschluß und verbindet den Eingang unmittelbar mit dem Ölsumpf. Wenn bei dieser Ausführungsform folglich beide Kupplungen einen Druck von mehr als 7,5 bar besitzen, wird die Kupplung mit dem geringeren Druck unmittelbar mit dem Ölsumpf verbunden und folglich geöffnet. Hierdurch wird verhindert, daß beide Kupplungen gleichzeitig betätigt werden. Eine Getriebeblockage kann nicht auftreten.

Im Grundzustand ist der Eingang über eine sehr kleine Blende 87 (bspw. Durchmesser 1 mm) mit dem Ölsumpf gekoppelt.

Die zwei Kupplungsdrücke werden ferner in einem logischen Wechselventil 98 miteinander verglichen. Der größere der zwei Kupplungsdrücke wird an den Eingang eines weiteren Ventils 100 gelegt, dessen Aufbau dem Ventil 94 vollkommen entspricht. Auch dort ist im passiven Zustand eine Blende 86 mit einem Durchmesser von 1 mm vorgesehen.

Durch das logische Wechselventil 98, das weitere Ventile 100 und die Blenden 86, 87 wird eine weitere Sicherheitseinrichtung 84 gebildet. Die Sicherheitseinrichtung 84 dient dazu, die Funktion von zwei Drucksensoren 85 für den Kupplungsdruck für die Aktuatoren 50 bzw. 52 zu überwachen und ggf. als Notfunktion zu ersetzen.

Durch die Tatsache, daß zu dem Zweig vom Steuerausgang B1 bzw. B2 der Wegeventile PV01 bzw. PV02 zu den Aktuatoren 50, 52 ein paralleler Zweig mit einer Blende 86 und 87 errichtet wird, wird eine Kennlinie von Druck in der Leitung (entsprechend dem mittels der Sensoren 85 gemessenen Druck) und einer Stellgröße des Ventils PV01 bzw. PV02 errichtet. Die Stellgröße ist bspw. der Magnetstrom oder der Hub.

Auf diese Weise kann bei Ausfall eines Drucksensors 85 durch eine geeignete Steuerung unter Kenntnis der errichteten Kennlinie eine Notfunktion durchgeführt werden, wobei die Kupplungsdrücke durch Modulieren der Ventile PV01, PV02 eingestellt werden. Andererseits ist es mittels der Sicherheitseinrichtung 84 auch möglich, die Funktion der Drucksensoren 85 regelmäßig auf Plausibilität hin zu überprüfen.

Es versteht sich, daß die Blenden 86, 87 bei dieser Ausführungsform in der Regel nur dann aktiv sind und daher den Steuerölstrom erhöhen, wenn die Ventile 94,100 durchgeschaltet sind. Dies ist dann der Fall, wenn wenigstens eine der Kupplungen aktiv druckgeregelt wird (über Anschlüsse B1,B2). Folglich sind die Blenden 86,87 nur bei Bedarf aktiviert und bei voll geschlossener Kupplung tritt kein Verlust auf.

In Fig. 18 ist ferner eine weitere Funktion gezeigt, bei der das Steueröl für den Aktuator 58 über jeweilige Blenden 102 als Kühlöl für Synchronelemente nutzbar gemacht wird.

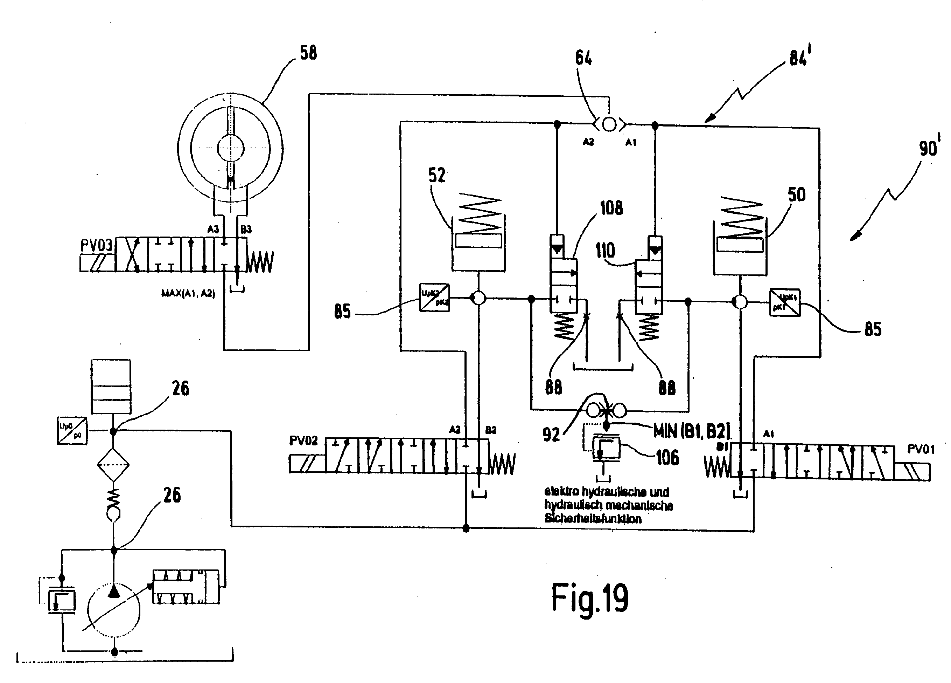

Fig. 19 zeigt eine alternative Sicherheitseinrichtung 90' und eine alternative weitere Sicherheitseinrichtung 84'.

Die Sicherheitseinrichtung 90' weist wiederum das logische Minderventil 92 auf, dessen Ausgang mit einem Sicherheitsdruckventil 106 verbunden ist. Das Sicherheitsdruckventil 106 schaltet ab einem gewissen Steuerdruck (z.B. 7,5 bar) an den Ölsumpf durch. Die Funktion ist daher identisch wie bei dem Sicherheitswegeventil 94 der Fig. 18.

Die Sicherheitseinrichtung 90' weist ferner zwei hydraulisch gesteuerte 2/2-Wegeventile 108, 110 auf, die mit den Steueranschlüssen A1, A2 der Kupplungsventile PV01 bzw. PV02 verbunden sind.

Sobald die Nebenfunktion der jeweiligen Kupplung über den Steuerausgang A1 bzw. A2 aktiv wird, schaltet das zugeordnete Wegeventil 108 bzw. 110 durch an eine Leitung, die über eine Blende 88 (wie oben mit einem Durchmesser von bspw. 1 mm) an den Ölsumpf führt. Bei dieser Ausführungsform kann dieses Steueröl auch als Kühlöl für die jeweilige Kupplung genutzt werden.

Im übrigen ist die Funktion identisch wie bei der Sicherheitseinrichtung 90 der Fig. 18.

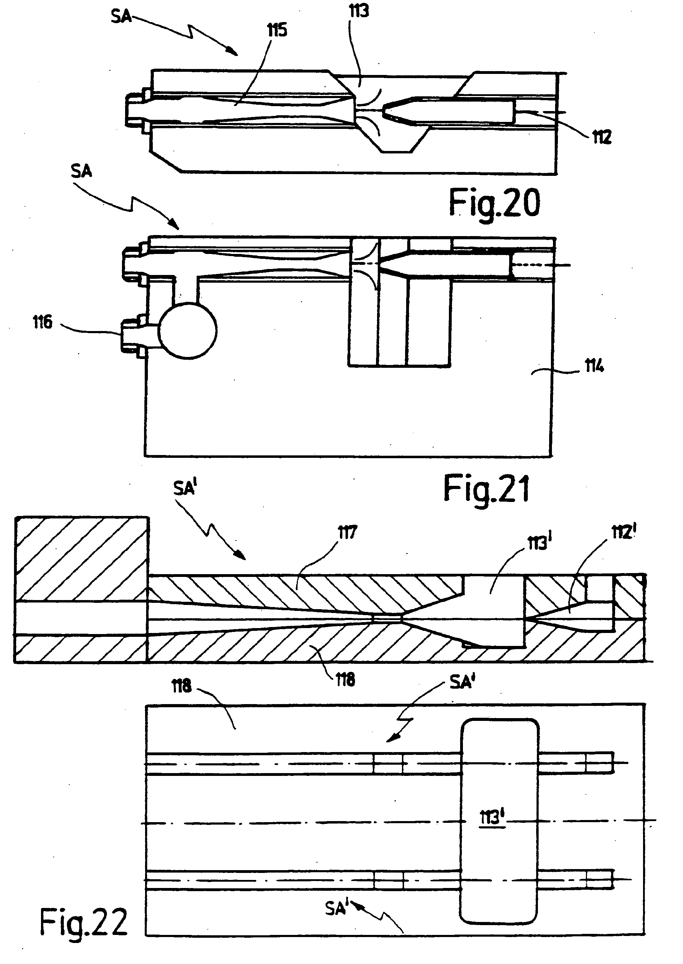

Die Fig. 20 und 21 zeigen in weitgehend schematischer Form Realisierungsmöglichkeiten für die Strahlpumpen SA in einer Seitenansicht bzw. einer Draufsicht.

Die allgemeine Funktionsweise von solchen Strahlpumpen ist bekannt. Im vorliegenden Fall ist eine Treibdüse 112 in axialer Richtung mittels eines Gewindes verstellbar ausgebildet. Eine Saugdüse 113 ist als Ausnehmung in einem Grundelement 114 ausgebildet. Die Treibdüse 112 ragt in die Ausnehmung 113 hinein.

Die Mischdüse und Diffuser sind als ein weiteres Element 115 ausgebildet, das über ein weiteres Gewinde in das Grundelement 114 eingesetzt ist.

In Fig. 21 ist ferner zu erkennen, daß der Ausgang der Strahlpumpe SA mit einer weiteren Leitung 116 verbunden werden kann.

In Fig. 22 ist in schematischer Form eine Realisierung einer Strahlpumpe SA' gezeigt, bei der eine axiale Hälfte mittels eines Getriebegehäuses 117 gebildet ist, die andere Hälfte durch eine Ventilplatte 118.

In der in Fig. 22 darunter gezeigten Draufsicht ist zu erkennen, daß zwei Strahlpumpen SA' nebeneinander realisiert sind, wobei diese sich eine Ausnehmung für die Saugdüse 113' teilen.

## Patentansprüche

1. Hydraulische Schaltung (10) für ein automatisiertes Doppelkupplungsgetriebe für Kraftfahrzeuge, das ein Vorgelegegetriebe mit zwei parallelen Kraftübertragungszweigen und zwei Kupplungen aufweist, mit
- einem Hochdruckkreis (16) mit wenigstens einem Aktuator (50-56, 62, 68, 70) für das Vorgelegegetriebe und/oder die Kupplungen,
- einem Niederdruckkreis (14) zur Schmierung und/oder Kühlung von Bauteilen des Doppelkupplungsgetriebes, und
- einer ersten Verstellpumpe (20) zur variablen Bereitstellung des Hochdruckes für den Hochdruckkreis (16),
**dadurch gekennzeichnet, dass**
- eine hydraulische Sicherheitsschaltung (90) im Hochdruckkreis (16) vorgesehen ist, die verhindert, dass beide Kupplungen gleichzeitig geschlossen werden, und
- die Sicherheitsschaltung (90) ein logisches Minderventil (92) aufweist, dessen Steuerausgang der kleinere der Steuerdrücke für Aktuatoren (50, 52) der zwei Kupplungen ist.

2. Hydraulische Schaltung nach Anspruch 1, **dadurch gekennzeichnet, dass** das Minderventil (92) mit einem Steueranschluss eines Sicherheitsventils (94) verbunden ist.

3. Hydraulische Schaltung nach Anspruch 2, **dadurch gekennzeichnet, dass** der Aktuator (50, 52), der mit einem geringeren Druck beaufschlagt ist, über das Sicherheitsventil (94) mit dem Ölsumpf verbindbar ist.

4. Hydraulische Schaltung nach einem der Ansprüche 1 bis 3, **dadurch gekennzeichnet, daß** der Niederdruckkreis (14) eine Mehrzahl von zweiten Pumpen (SA01-SA04) aufweist, die parallel an die erste Verstellpumpe (20) angeschlossen sind.

5. Hydraulische Schaltung nach Anspruch 4, **dadurch gekennzeichnet, daß** die zweiten Pumpen (SA) als Strahlpumpen (SA01-SA04) ausgebildet sind, die triebstromseitig an den Ausgang (26) der ersten Verstellpumpe (20) angeschlossen sind.

6. Hydraulische Schaltung nach einem der Ansprüche 1 bis 5, **dadurch gekennzeichnet, daß** der Niederdruckkreis (14) wenigstens eine Strahlpumpe (SA01, SA02, SA03) aufweist, die triebstromseitig an den Ausgang (26) der ersten Verstellpumpe (20) angeschlossen ist und deren Ausgangsvolumenstrom (Q_G1, Q_G2, Q_G3) zur Kühlung und/oder Schmierung verwendet wird.

7. Hydraulische Schaltung nach Anspruch 5 oder 6, **dadurch gekennzeichnet, daß** wenigstens eine der Strahlpumpen (SA) triebstromseitig über ein Schaltventil (SV) an den Ausgang (26) der ersten Verstellpumpe (20) angeschlossen ist.

8. Hydraulische Schaltung nach Anspruch 7, **dadurch gekennzeichnet, daß** die Strahlpumpe (SA03) temperaturgesteuert ist und triebstromseitig parallel zu dem Schaltventil (SV03) über eine Blende (BL03) an den Ausgang (26) der ersten Verstellpumpe (20) angeschlossen ist.

9. Hydraulische Schaltung nach einem der Ansprüche 5 bis 8, **dadurch gekennzeichnet, daß** wenigstens zwei Strahlpumpen (SA04, SA01; SA04, SA02) in Reihe schaltbar angeordnet sind.

10. Hydraulische Schaltung nach Anspruch 9, **dadurch gekennzeichnet, daß** eine der Strahlpumpen (SA04) ausgangsseitig mit einem Kühler (34) verbunden ist und daß der Ausgang des Kühlers (34) mit der Saugstromseite einer weiteren Strahlpumpe (SA01, SA02) verbindbar ist.

11. Hydraulische Schaltung nach einem der Ansprüche 5 bis 10, **dadurch gekennzeichnet, daß** wenigstens eine der Strahlpumpen (SA04) ausgangsseitig mit einem Kühler (34) verbunden ist.

12. Hydraulische Schaltung nach einem der Ansprüche 1 bis 11 **dadurch gekennzeichnet, daß** der Niederdruckkreis (14) vier Pumpen (SA01-SA04) aufweist, von denen jeweils eine (SA01, SA02) den zwei Kupplungen, eine (SA03) dem Getriebe und eine (SA04) einem Ölkühler (34) zugeordnet ist.

13. Hydraulische Schaltung nach einem der Ansprüche 1 bis 12 **dadurch gekennzeichnet, daß** der Hochdruckkreis (16) für die zwei Kupplungen jeweils einen Aktuator (50, 52) und ein proportionales Wegeventil (PV01, PV02) aufweist.

14. Hydraulische Schaltung nach einem der Ansprüche 1 bis 13, **gekennzeichnet durch** eine hydraulische weitere Sicherheitsschaltung (84) im Hochdruckkreis (16) für einen Drucksensor (85), wobei die weitere Sicherheitsschaltung wenigstens eine Blende (86, 87; 88) in einem Parallelzweig aufweist, **durch** die eine Kennlinie von Druck über einer Stellgröße eines Ventils (PVO1, PV02) zur Drucksteuerung vorgegeben wird, wobei der Wert der Stellgröße mit dem entsprechenden Wert des Drucksensors vergleichbar ist.

15. Doppelkupplungsgetriebe mit einer hydraulischen Schaltung gemäß einem der Ansprüche 1 bis 14.

## Claims

1. A hydraulic circuit (10) for an automated twin clutch transmission for motor vehicles, which comprises a countershaft transmission with two parallel power transmission branches, and two clutches, comprising:
- a high pressure circuit (16) having at least one actuator (50-56, 62, 68, 70) for the countershaft transmission and/or the clutches,
- a low pressure circuit (14) for lubrication and/or cooling of elements of the twin clutch transmission, and
- a first adjustment pump (20) for providing a variable high pressure for the high pressure circuit (16),
**characterized in that** a hydraulic safety circuit (90) is provided in the high pressure circuit (16), which prevents that the two clutches are closed simultaneously, wherein the safety circuit (90) comprises a logical reducer valve (92) having a control output which corresponds to the smaller control pressure of the control pressures of the two actuators (50, 52) for the two clutches.

2. The hydraulic circuit of claim 1, **characterized in that** the reducer valve (92) is connected to a control connector of a safety valve (94).

3. The hydraulic circuit of claim 2, **characterized in that** the actuator (50, 52) which is applied with a smaller pressure is connectable to the oil sump via the safety valve (94).

4. The hydraulic circuit of any of claims 1 to 3, **characterized in that** the low pressure circuit (14) comprises a plurality of second pumps (SA01-SA04) which are connected in parallel to the first adjustment pump (20).

5. The hydraulic circuit of claim 4, **characterized in that** the second pumps (SA) are jet pumps (SA01-SA04), the driving jet side thereof being connected to the output (26) of the first adjustment pump (20).

6. The hydraulic circuit of any of claims 1 to 5, **characterized in that** the low pressure circuit (14) comprises at least one jet pump (SA01, SA02, SA03), the driving jet side of which being connected to the output (26) of the first adjustment pump (20) and the output volume flow (Q_G1, Q_G2, Q_G3) of which being used for cooling and/or lubrication.

7. The hydraulic circuit of claim 5 or 6, **characterized in that** the driving jet side of at least one of the jet pumps (SA) is connected to the output (26) of the first adjustment pump (20) via an on-off valve (SV).

8. The hydraulic circuit of claim 7, **characterized in that** the jet pump (SA03) is temperature controlled and the driving jet side of the jet pump (SA03) is connected in parallel to the on-off valve (SV03) via a restriction (BL03) to the output (26) of the first adjustment pump (20).

9. The hydraulic circuit of any of claims 5 to 8, **characterized in that** at least two jet pumps (SA04, SA01; SA04, SA02) are arranged in series.

10. The hydraulic circuit of claim 9, **characterized in that** the output of one of the jet pumps (SA04) is connected to a cooler (34), and wherein the output of the cooler (34) is connectable to a suction jet side of another jet pump (SA01; SA02).

11. The hydraulic circuit of any of claims 5 to 10, **characterized in that** the output of the at least one jet pump (SA04) is connected to a cooler (34).

12. The hydraulic circuit of any of claims 1 to 11, **characterized in that** the low pressure circuit (14) comprises four jet pumps (SA01-SA04), one jet pump (SA01, SA02) for each of the two clutches, one jet pump (SA03) being associated to the transmission, and one jet pump (SA04) being associated to an oil cooler (34).

13. The hydraulic circuit of any of claims 1 to 12, **characterized in that** the high pressure circuit (16) comprises an actuator (50, 52) and a proportional directional control valve (PV01, PV02) for each of the two clutches.

14. The hydraulic circuit of any of claims 1 to 13, **characterized in that** the high pressure circuit (16) comprises a further hydraulic safety circuit (84) for a pressure sensor (85), wherein the further safety circuit comprises at least one restriction (86, 87; 88) in a parallel branch, which is provided in accordance with a characteristic of pressure versus a manipulating value of a valve (PV01, PV02) for pressure control, wherein the manipulating value can be compared to the corresponding value of the pressure sensor.

15. A twin clutch transmission having a hydraulic circuit according to any of claims 1 to 14.

## Revendications

1. Circuit hydraulique (10) pour une transmission automatisée à double embrayage pour des véhicules automobiles, qui présente une transmission de renvoi avec deux branches parallèles de transmission de force et deux embrayages, avec
- un circuit haute pression (16) avec au moins un actionneur (50-56, 62, 68, 70) pour la transmission de renvoi et/ou pour les embrayages,
- un circuit basse pression (14) pour la lubrification et/ou le refroidissement d'éléments de la transmission à double embrayage, et
- une première pompe de réglage (20) pour fournir une haute pression variable pour le circuit haute pression (16),
**caractérisé en ce**
- **qu'**il est prévu un circuit de sécurité hydraulique (90) dans le circuit haute pression (16), lequel empêche que les deux embrayages soient fermés simultanément, et
- en ce que le circuit de sécurité (90) présente une soupape de réduction logique (92), dont la sortie de commande est la plus petite des pressions de commande pour les actionneurs (50, 52) des deux embrayages.

2. Circuit hydraulique selon la revendication 1, **caractérisé en ce que** la soupape de réduction (92) est connectée à un raccord de commande d'une soupape de sécurité (94).

3. Circuit hydraulique selon la revendication 2, **caractérisé en ce que** l'actionneur (50, 52) qui est sollicité par une plus faible pression, peut être connecté par le biais de la soupape de sécurité (94) au carter d'huile.

4. Circuit hydraulique selon l'une quelconque des revendications 1 à 3, **caractérisé en ce que** le circuit basse pression (14) présente une pluralité de deuxièmes pompes (SA01-SA04), qui sont raccordées en parallèle à la première pompe de réglage (20).

5. Circuit hydraulique selon la revendication 4, **caractérisé en ce que** les deuxièmes pompes (SA) sont réalisées en tant que pompes à jet (SA01-SA04) qui sont raccordées du côté du jet moteur à la sortie (26) de la première pompe de réglage (20).

6. Circuit hydraulique selon l'une quelconque des revendications 1 à 5, **caractérisé en ce que** le circuit basse pression (14) présente au moins une pompe à jet (SA01, SA02, SA03), qui est raccordée du côté du jet moteur à la sortie (26) de la première pompe de réglage (20), et dont le flux volumique de sortie (Q_G1, Q_G2, Q_G3) est utilisé pour le refroidissement et/ou la lubrification.

7. Circuit hydraulique selon la revendication 5 ou 6, **caractérisé en ce qu'**au moins une des pompes à jet (SA) est raccordée du côté du jet moteur à la sortie (26) de la première pompe de réglage (20) par l'intermédiaire d'une soupape de commutation (SV).

8. Circuit hydraulique selon la revendication 7, **caractérisé en ce que** la pompe à jet (SA03) est commandée en température et est raccordée du côté du jet moteur à la sortie de (26) de la première pompe de réglage (20) parallèlement à la soupape de commutation (SV03), par l'intermédiaire d'un étranglement (BL03).

9. Circuit hydraulique selon l'une des revendications 5 à 8, **caractérisé en ce qu'**au moins deux pompes à jet (SA04, SA01 ; SA04, SA02) sont disposées en pouvant être montées en série.

10. Circuit hydraulique selon la revendication 9, **caractérisé en ce qu'**une des pompes à jet (SA04) est reliée du côté de la sortie à un refroidisseur (34), et **en ce que** la sortie du refroidisseur (34) peut être reliée au côté du jet d'aspiration d'une autre pompe à jet (SA01, SA02).

11. Circuit hydraulique selon l'une des revendications 5 à 10, **caractérisé en ce qu'**au moins une des pompes à jet (SA04) est reliée du côté de la sortie à un refroidisseur (34).

12. Circuit hydraulique selon l'une des revendications 1 à 11, **caractérisé en ce que** le circuit basse pression (14) présente quatre pompes (SA01-SA04), parmi lesquelles une pompe respective (SA01, SA02) est associée aux deux embrayages, une pompe (SA03) à la transmission, et une pompe (SA04) à un refroidisseur d'huile (34).

13. Circuit hydraulique selon l'une des revendications 1 à 12, **caractérisé en ce que** le circuit haute pression (16) pour les deux embrayages présente respectivement un actionneur (50, 52) et un distributeur proportionnel à plusieurs voies (PV01, PV02).

14. Circuit hydraulique selon l'une des revendications 1 à 13, **caractérisé par** un circuit de sécurité hydraulique supplémentaire (84) dans le circuit haute pression (16) pour un capteur de pression (85), le circuit de sécurité supplémentaire présentant au moins un diaphragme (86, 87 ; 88) dans une branche parallèle, qui permet de prédéfinir une caractéristique de pression par le biais d'une valeur de réglage d'une soupape (PV01, PV02) pour la commande de pression, la valeur de la valeur de réglage pouvant être comparée avec la valeur correspondante du capteur de pression.

15. Transmission à double embrayage avec un circuit hydraulique selon l'une des revendications 1 à 14.
